# EUROPEAN PATENT APPLICATION

(11) **EP 3 306 106 A1**
(43) Date of publication of application: **11.04.2018**
(21) Application number: 15894287.0
(22) Date of filing: 30.10.2015
(51) Int. Cl.: F04D 29/58

(54) **BLOWER DEVICE AND CLEANER**

(30) Priority: 29.05.2015 US 201562168165 P; 18.06.2015 US 201562181368 P
(71) Applicant: Nidec Corporation, Kyoto-shi, Kyoto 601-8205 (JP)
(72) Inventor: HAYAMITSU Ryosuke, Kyoto-shi Kyoto 601-8205 (JP)
(74) Representative: Zimmermann, Tankred Klaus
(86) International application number: PCT/JP2015/080700
(87) International publication number: WO 2016/194255

(57) **Abstract**

A blower according to an exemplary embodiment of the present invention includes a rotor that includes a shaft disposed along a central axis that extends in a vertical direction, a stator that is positioned radially outward of the rotor, a tubular housing that accommodates the rotor and the stator, and an impeller that is attached to the shaft at a position above the stator. The stator includes an annular core back portion, a plurality of tooth portions that extend radially inwards from the core back portion, a plurality of coils wound around the tooth portions, and at least two wall portions that are arranged with a gap provided therebetween in a circumferential direction. Radially outer end portions of the two wall portions constitute an outer opening portion of the gap that is on an outer side in a radial direction. Radially inner end portions of the two wall portions constitute an inner opening portion of the gap that is on an inner side in the radial direction. The housing includes a first through-hole that penetrates the housing in the radial direction. The first through-hole is connected to the outer opening portion. At least one of the wall portions that are adjacent to each other in the circumferential direction includes a side end surface that faces the gap and is inclined with respect to the radial direction.

## Description

### Technical Field

The present invention relates to a blower and a vacuum cleaner.

### Background Art

In the related art, an electric air blower that has a structure in which sucked air passes through a bracket holding a stator has been proposed (for example, refer to PTL 1).

### Citation List

### Patent Literature

PTL 1: Japanese Unexamined Patent Application Publication No. 2015-59507

### Summary of Invention

### Technical Problem

However, if the sucked air simply passes through the bracket, it is difficult to effectively cool the stator in some cases. In addition, air loss is likely to occur when air is drawn into the bracket and there is a problem that the air blowing efficiency of the electric air blower is decreased.

In consideration of the above-described problems, an object of an aspect of the present invention is to provide a blower that has a structure with which it is possible to effectively cool a stator while suppressing a decrease in air blowing efficiency. In addition, another object of the aspect is to provide a vacuum cleaner including such a blower.

### Solution to Problem

A blower according to an exemplary embodiment of the present invention includes a rotor that includes a shaft disposed along a central axis that extends in a vertical direction, a stator that is positioned radially outward of the rotor, a tubular housing that accommodates the rotor and the stator, and an impeller that is attached to the shaft at a position above the stator, in which the stator includes an annular core back portion, a plurality of tooth portions that extend radially inwards from the core back portion, a plurality of coils wound around the tooth portions, and at least two wall portions that are arranged with a gap provided therebetween in a circumferential direction, radially outer end portions of the two wall portions constitute an outer opening portion of the gap that is on an outer side in a radial direction, radially inner end portions of the two wall portions constitute an inner opening portion of the gap that is on an inner side in the radial direction, the housing includes a first through-hole that penetrates the housing in the radial direction, the first through-hole is connected to the outer opening portion, and at least one of the wall portions that are adjacent to each other in the circumferential direction includes a side end surface that faces the gap and is inclined with respect to the radial direction.

A vacuum cleaner according to an exemplary embodiment of the present invention includes the blower.

### Advantageous Effects of Invention

According to the exemplary embodiments of the present invention, a blower that has a structure with which it is possible to effectively cool a stator while suppressing a decrease in air blowing efficiency is provided. In addition, a vacuum cleaner including such a blower is provided.

### Brief Description of Drawings

[Fig. 1] Fig. 1 is a sectional view illustrating a blower according to an embodiment.
[Fig. 2] Fig. 2 is an exploded perspective view illustrating the blower according to the embodiment.
[Fig. 3] Fig. 3 is a perspective view of a motor according to the embodiment as seen from below.
[Fig. 4] Fig. 4 is a perspective view of a stator according to the embodiment.
[Fig. 5] Fig. 5 is an exploded perspective view illustrating the stator, a circuit board, and a lower cover according to the embodiment.
[Fig. 6] Fig. 6 is a plan sectional view of the motor according to the embodiment.
[Fig. 7] Fig. 7 is an explanation view illustrating how a rotation sensor is mounted.
[Fig. 8] Fig. 8 is a perspective view of a stationary blade member according to the embodiment as seen from below.
[Fig. 9] Fig. 9 is an enlarged sectional view partially illustrating an impeller, the stationary blade member, and an impeller housing according to the embodiment.
[Fig. 10] Fig. 10 is a partial side view of the stationary blade member according to the embodiment.
[Fig. 11] Fig. 11 is a plan view of moving blades of the impeller according to the embodiment.
[Fig. 12] Fig. 12 is a sectional view illustrating a blower in Modification Example 1.
[Fig. 13] Fig. 13 is an exploded perspective view of the blower in Modification Example 1.
[Fig. 14] Fig. 14 is a perspective view of the motor in Modification Example 1 as seen from below.
[Fig. 15] Fig. 15 is a partial sectional perspective view of an exhaust gas guiding member in Modification Example 1.
[Fig. 16] Fig. 16 is an enlarged sectional view partially illustrating an impeller, the exhaust gas guiding member, and an impeller housing in Modification Example 1.
[Fig. 17] Fig. 17 is a sectional view illustrating a blower in Modification Example 2.
[Fig. 18] Fig. 18 is a plan view illustrating the blower in Modification Example 2.
[Fig. 19] Fig. 19 is a perspective view of a vacuum cleaner according to the embodiment.

### Description of Embodiments

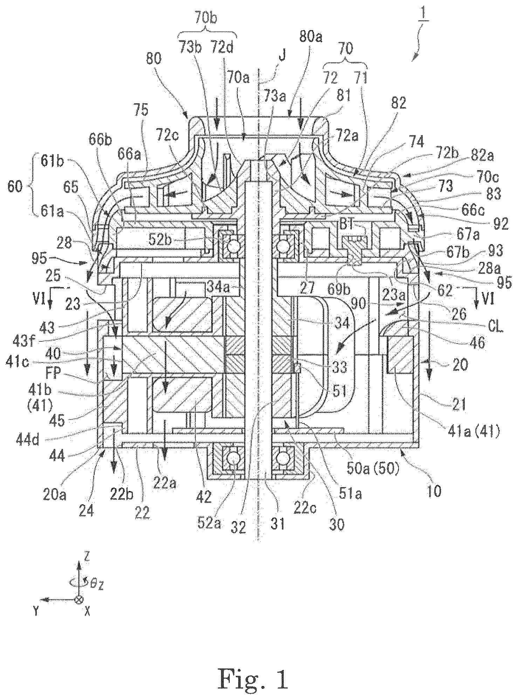

Hereinafter, a motor according to an embodiment of the present invention will be described with reference to drawings. In the drawings, an XYZ coordinate system will be appropriately illustrated as a three-dimensional rectangular coordinate system. In the XYZ coordinate system, a Z-axis direction refers to a direction parallel to an axial direction along a central axis J illustrated in Fig. 1. A Y-axis direction refers to a direction orthogonal to the Z-axis direction and is a right-left direction in Fig. 1. An X-axis direction refers to a direction that is orthogonal to both of the Y-axis direction and the Z-axis direction.

In addition, in the following description, a direction (the Z-axis direction) in which the central axis J extends will be referred to as a vertical direction. The positive side in the Z-axis direction (a +Z side) will be referred to as the "upper side (the axially upper side)" and the negative side in the Z-axis direction (a -Z side) will be referred to as the "lower side (the axially lower side)". Note that, the vertical direction, the upper side, and the lower side are names that are used simply for the purpose of description and do not limit the actual positional relationship or direction. In addition, unless otherwise specifically noted, a direction (the Z-axis direction) parallel to the central axis J will be simply referred to as an "axial direction", a radial direction around the central axis J will be simply referred to as a "radial direction", and a circumferential direction around the central axis J will be simply referred to as a "circumferential direction".

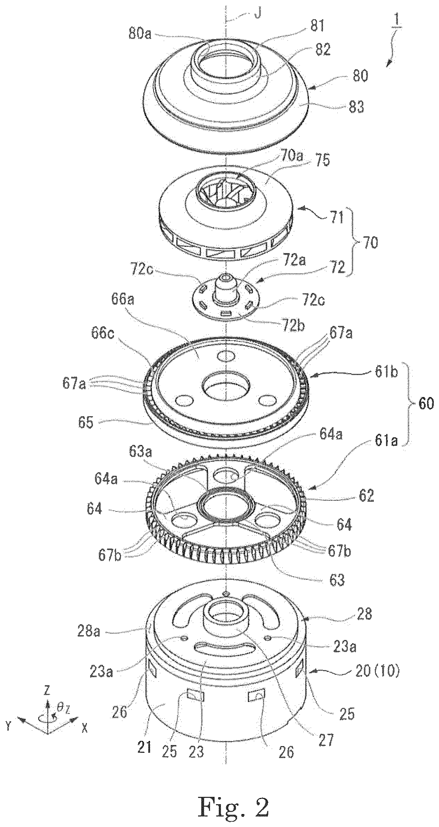

As illustrated in Figs. 1 and 2, a blower 1 includes a motor 10, an impeller 70, a stationary blade member 60, and an impeller housing 80. The stationary blade member 60 is attached to an upper side (the +Z side) of the motor 10. The impeller housing 80 is attached to an upper side of the stationary blade member 60. The impeller 70 is accommodated between the stationary blade member 60 and the impeller housing 80. The impeller 70 is attached to the motor 10 such that the impeller 70 can rotate around the central axis J.

In the embodiment, the impeller 70 rotates in a counter-clockwise direction (a +θz direction), which is one of circumferential directions, as seen from the upper side. In the following description, a side proceeding in the counter-clockwise direction as seen from the upper side (a +θz side) will be referred to as a front side in a rotation direction and a side proceeding in a clockwise direction as seen from the upper side (a -θz side) will be referred to as a rear side in the rotation direction.

In the embodiment, air is drawn into the impeller 70 as the impeller 70 is rotated by the motor 10. The air drawn into the impeller 70 is discharged radially outwards from the impeller 70 and is discharged to the outside of the blower 1 via an exhaust port 95 which will be described later. For example, a radially outer side of the blower 1 is covered by a casing of a device in which the blower 1 is installed. The air discharged from the blower 1 passes through, for example, a flow path positioned between the casing and a housing 20 of the motor 10 and flows downwards along an outer circumferential surface of the housing 20 of the motor 10.

As illustrated in Fig. 1, the motor 10 includes the housing 20, a lower cover 22, a rotor 30 that includes a shaft 31, a stator 40, a circuit board 50, a lower bearing 52a, and an upper bearing 52b. Accordingly, the blower 1 includes the rotor 30, the stator 40, the housing 20, and the impeller 70.

The housing 20 accommodates the rotor 30 and the stator 40 and has a tubular shape. The housing 20 is a covered cylindrical container. The housing 20 includes a cylindrical circumferential wall 21, an upper cover portion 23 that is positioned on an upper end of the circumferential wall 21, and an upper bearing holding portion 27 that is positioned on the central portion of the upper cover portion 23. The stator 40 is fixed to an inner surface of the housing 20. The upper bearing holding portion 27 has a tubular shape that protrudes upwards from the central portion of the upper cover portion 23. The upper bearing holding portion 27 holds the upper bearing 52b inside thereof.

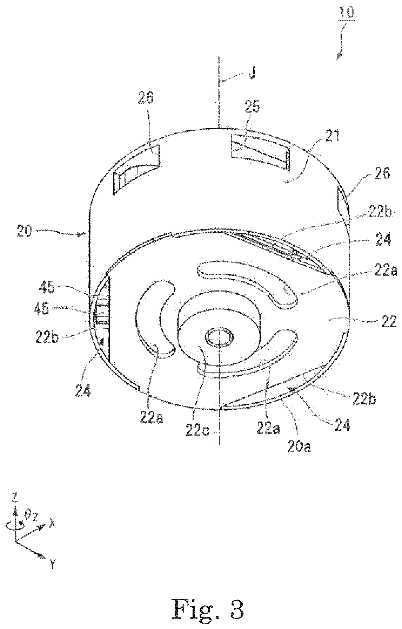

As illustrated in Figs. 1 and 3, first through-holes 25 and second through-holes 26 that penetrate the housing 20 in the radial direction are provided on the upper side of the circumferential wall 21 of the housing 20. That is, the housing 20 includes the first through-holes 26 that penetrate the housing 20 in the radial direction. In addition, the housing 20 includes the second through-holes 25 that penetrate the housing 20 in the radial direction. Note that, both of the first through-holes 26 and the second through-holes 25 are included in "through-holes". According to this configuration, a portion of air discharged through the exhaust port 95, which will be described later, flows into the housing 20 (the motor 10) such that a stator core 41 or coils 42, which will be described later, can be cooled.

Here, in a case where the upper cover portion of the housing includes a hole that penetrates the upper cover portion in an axial direction and air discharged from the impeller flows into the motor via the hole, it is necessary that the air discharged radially outwards from the impeller is guided to a position above the upper cover portion, that is, to a position below the impeller. Since an axial distance between the impeller and the upper cover portion is relatively small, the degree to which a guiding path, which guides the air discharged from the impeller into the motor, is curved is likely to be great. Therefore, there is a problem that a large amount of air is lost before the air flows into the motor after being discharged from the impeller.

With regard to this, since the first through-holes 26 and the second through-holes 25 penetrate the housing 20 in the radial direction, it is possible to cause the air discharged radially outwards from the impeller 70 to flow into the motor 10 via the outer circumferential surface of the housing 20 (the circumferential wall 21) as illustrated in Fig. 1. Accordingly, it is possible to cause the air discharged from the impeller 70 to flow into the motor 10 by causing the air to flow downwards along the outer circumferential surface of the housing 20. Therefore, it is possible to prevent the degree to which the guiding path, which guides the air discharged from the impeller 70 into the motor 10, is curved from being great. For this reason, it is possible to suppress loss of air over a time period in which the air flows into the motor 10 after being discharged from the impeller 70.

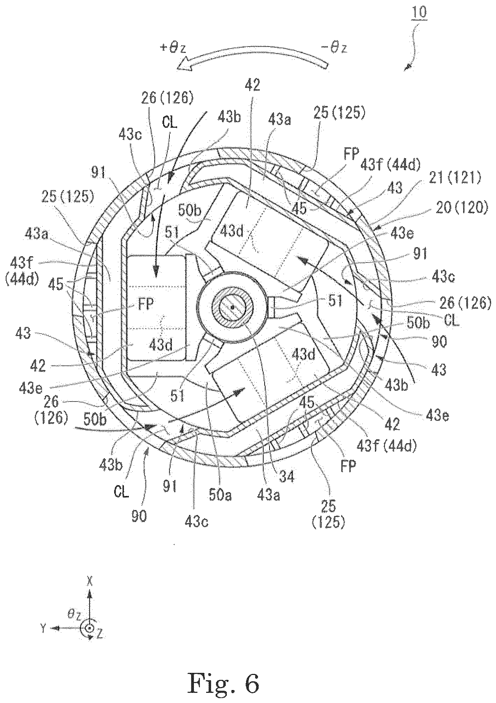

On the circumferential wall 21 of the housing 20, three first through-holes 25 and three second through-holes 26 are alternately positioned around the axis (refer to Fig. 6). As illustrated in Fig. 1, the first through-holes 26 and the second through-holes 25, that is, the through-holes are positioned above a core back portion 41a, which will be described later. Therefore, air flowing into the housing 20 can be caused to flow from a position above the stator 40 to a position below the stator 40 and it is easy to cool the stator 40. A stepped portion 28 that surrounds the upper cover portion 23 around the axis is provided between the circumferential wall 21 of the housing 20 and the upper cover portion 23.

The lower cover 22 is attached to an opening end 20a of the housing 20 that is on the lower side (a -Z side). A lower bearing holding portion 22c having a tubular shape that protrudes downwards from a lower surface of the lower cover 22 is provided on the central portion of the lower cover 22. The lower bearing holding portion 22c holds the lower bearing 52a.

As illustrated in Fig. 3, on the lower cover 22, three lower cover through-holes 22a, each of which penetrates the lower cover 22 in the axial direction, are provided around the axis. Each of the lower cover through-holes 22a has an arch shape that has a width in the radial direction. As illustrated in Fig. 1, at least a portion of the three lower cover through-holes 22a is positioned radially outward of an outer circumferential end of a main body portion 50a of the circuit board 50, which will be described later.

As illustrated in Fig. 3, an outer circumferential end of the lower cover 22 is provided with three cut-out portions 22b that are obtained by linearly cutting an outer circumferential portion of the lower cover 22. Gaps between an opening end 20a of the housing 20 that is on the lower side and the cut-out portions 22b are lower opening portions 24 of the motor 10.

As illustrated in Fig. 1, the rotor 30 includes the shaft 31, a rotor magnet 33, a lower magnet fixing member 32, and an upper magnet fixing member 34. That is, the rotor 30 includes the shaft 31. The shaft 31 is disposed along the central axis J extending in the vertical direction. The rotor magnet 33 has a cylindrical shape that surrounds the shaft 31 around the axis (a θz direction) from the outer side in the radial direction. The rotor magnet 33 is fixed to the shaft 31. Each of the lower magnet fixing member 32 and the upper magnet fixing member 34 has a cylindrical shape of which the outer diameter is the same as that of the rotor magnet 33. The lower magnet fixing member 32 and the upper magnet fixing member 34 are attached to the shaft 31 with the rotor magnet 33 being interposed therebetween in the axial direction. An upper portion of the upper magnet fixing member 34 in a central axis direction is provided with a small-diameter portion 34a of which the outer diameter is smaller than that of the lower side (the rotor magnet 33 side).

The shaft 31 is supported by the lower bearing 52a and the upper bearing 52b such that the shaft 31 can rotate around the axis (the θz direction). The impeller 70 is attached to an end portion of the shaft 31 that is on the upper side (the +Z side). The impeller 70 is attached to the shaft 31 at a position above the stator 40. The impeller 70 integrally rotates with the shaft 31 around the axis.

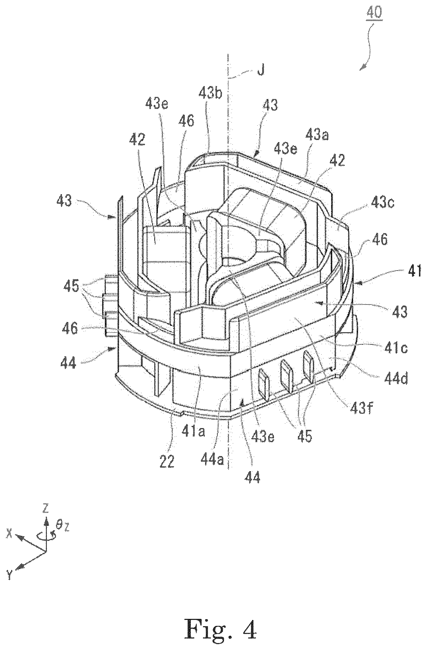

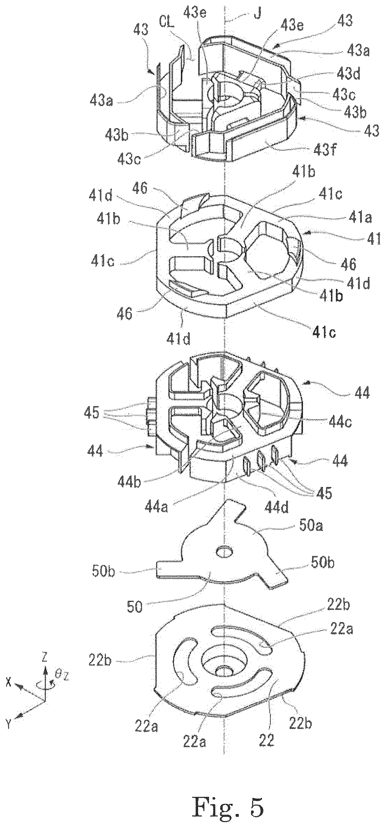

The stator 40 is positioned radially outward of the rotor 30. The stator 40 surrounds the rotor 30 around the axis (the θz direction). As illustrated in Figs. 4 and 5, the stator 40 includes the stator core 41, inclined members 46, a plurality of (three) upper insulators 43, a plurality of (three) lower insulators 44, and the plurality of coils 42. That is, the stator 40 further includes insulators. In the embodiment, the insulator is a concept that includes the upper insulators 43 and the lower insulators 44. That is, in the embodiment, the upper insulators 43 and the lower insulators 44 correspond to an "insulator". Note that, in the embodiment, the inclined members 46 correspond to a "first inclined portion".

As illustrated in Fig. 5, the stator core 41 includes the core back portion 41a and a plurality of (three) tooth portions 41b. The core back portion 41a has an annular shape. More specifically, the core back portion 41a has an annular shape that extends around the central axis J. The core back portion 41a has a configuration in which three linear portions 41c and three arc portions 41d are alternately positioned around the axis. Each tooth portion 41b extends radially inwards from the core back portion 41a. More specifically, each tooth portion 41b extends radially inwards from an inner circumferential surface of each linear portion 41c. The tooth portions 41b are disposed at regular intervals in the circumferential direction.

Note that, in the specification, an expression "a member has an annular shape" also means a case where a portion in the circumferential direction has discontinuity in addition to a case where the entire portion in the circumferential direction is continuous. In addition, an expression "a member has an annular shape" also means a case where the member is configured of a plurality of members and the plurality of members are disposed along the annular shape. For example, the core back portion 41a may be configured of a plurality of core pieces and the plurality of core pieces may be disposed along the circumferential direction.

The inclined member 46 that guides air inwards in the stator 40 is disposed on an upper surface of each arc portion 41d of the core back portion 41a. As illustrated in Fig. 1, an upper surface of the inclined member 46 faces a gap CL, which will be described later. That is, the stator 40 further includes the inclined members 46 of which the upper surfaces face the gaps CL. Each inclined member 46 has a shape in which the thickness decreases toward the inner side in the radial direction from the outer side in the radial direction. The position of the upper surface of each inclined member 46 becomes lower toward the inner side in the radial direction from the outer side in the radial direction. Therefore, it is possible to guide air flowing into the gap CL to the lower side while sending the air radially inwards. The upper surface of each inclined member 46 is a curved surface of which the inclination with respect to the axial direction becomes small toward the inner side in the radial direction from the outer side in the radial direction.

Note that, each inclined member 46 may be a portion of the core back portion 41a, may be a portion of the upper insulator 43, and may be a portion of the housing 20.

As illustrated in Figs. 4 and 5, the upper insulators 43 are insulating members that cover a portion of an upper surface and a side surface of the stator core 41. The upper insulators 43 are provided to respectively correspond to the three tooth portions 41b. Each upper insulator 43 includes an upper outer circumferential wall portion 43a, an upper inner circumferential wall portion 43e, and an upper insulating portion 43d. That is, the stator 40 includes the upper outer circumferential wall portions 43a.

Each upper outer circumferential wall portion 43a is positioned above the core back portion 41a. Each upper inner circumferential wall portion 43e is positioned above a tip end of the tooth portion 41b. Each upper insulating portion 43d connects the upper outer circumferential wall portion 43a and the upper inner circumferential wall portion 43e to each other in the radial direction and is positioned above a portion of the tooth portion 41b around which the coil 42 is wound.

The lower insulators 44 are insulating members that cover a portion of a lower surface and the side surface of the stator core 41. The lower insulators 44 are provided to respectively correspond to the three tooth portions 41b. Each lower insulator 44 includes a lower outer circumferential wall portion 44a, a lower inner circumferential wall portion 44c, and a lower insulating portion 44b. Each lower outer circumferential wall portion 44a is positioned below the core back portion 41a. Each lower inner circumferential wall portion 44c is positioned below the tip end of the tooth portion 41b. Each lower insulating portion 44b connects the lower outer circumferential wall portion 44a and the lower inner circumferential wall portion 44c to each other in the radial direction and is positioned below the portion of the tooth portion 41b around which the coil 42 is wound.

The tooth portions 41b of the stator core 41 are interposed between the upper insulators 43 and the lower insulators 44 in the axial direction. The upper insulators 43 and the lower insulators 44 respectively cover the plurality of tooth portions 41b. The coils 42 are wound around the tooth portions 41b covered by the upper insulating portions 43d of the upper insulators 43 and the lower insulating portions 44b of the lower insulators 44. Accordingly, the plurality of coils 42 are wound around the tooth portions 41b. More specifically, the coils 42 are wound around the tooth portions 41b via the upper insulators 43 and the lower insulators 44. That is, the coils 42 are wound around the tooth portions 41b via the insulators.

As illustrated in Fig. 4, the three upper outer circumferential wall portions 43a positioned above the core back portion 41a of the stator core 41 surround the coils 42 at a position above the stator core 41. A portion of an outer circumferential surface of each upper outer circumferential wall portion 43a that is positioned above the linear portion 41c is an upper flat surface 43f that is aligned with an outer circumferential surface of the linear portion 41c and extends in the axial direction. As illustrated in Fig. 6, an arc-shaped surface that is disposed along an inner circumferential surface of the housing 20 is provided on each of the opposite sides of each upper flat surface 43f in the circumferential direction.

The stator 40 includes at least two wall portions that are arranged with a gap provided therebetween in the circumferential direction. That is, the stator 40 includes the core back portion 41a, the plurality of tooth portions 41b, the plurality of coils 42, and at least two wall portions. In the embodiment, the wall portions may be portions including the upper outer circumferential wall portions 43a and the upper inner circumferential wall portions 43e. That is, the upper outer circumferential wall portions 43a and the upper inner circumferential wall portions 43e correspond to a "wall portion". Accordingly, in the embodiment, the insulator includes the wall portion. Note that, the wall portions may be portions including the lower outer circumferential wall portions 44a and the lower inner circumferential wall portions 44c.

The upper outer circumferential wall portions 43a that are adjacent to each other in the circumferential direction are separated from each other at a predetermined interval. In other words, the plurality of upper outer circumferential wall portions 43a are arranged with gaps CL provided therebetween in the circumferential direction. An opening portion is provided at each of opposite radial ends of each gap CL. Radially outer end portions of two upper outer circumferential wall portions 43a that are adjacent to each other in the circumferential direction constitute an outer opening portion 90 of each gap CL that is on the outer side in the radial direction. Radially inner end portions of two upper outer circumferential wall portions 43a that are adjacent to each other in the circumferential direction constitute an inner opening portion 91 of each gap CL that is on the inner side in the radial direction. Each inner opening portion 91 is positioned between adjacent coils 42 in the circumferential direction.

The gaps CL are positioned radially inward of the first through-holes 26 of the housing 20. The first through-holes 26 are connected to the outer opening portions 90. Accordingly, air flowing into the housing 20 via the first through-holes 26 flows into the gaps CL via the outer opening portions 90. Air flowing into the gaps CL is discharged to a space which is positioned radially inward of the core back portion 41a via the inner opening portions 91. That is, the first through-holes 26 and the gaps CL serve as air flow paths that guide air flowing from the radially outer side of the housing 20 to the radially inner side of the stator 40. The air guided to the radially inner side of the stator 40 flows downwards in the vicinity of the coils 42 and is discharged to the outside of the housing 20 via the lower cover through-holes 22a. Accordingly, it is possible to effectively guide air passing through the gaps to the coils 42 and thus it is possible to cool the coils 42 as heat generators and to further improve the cooling efficiency of the stator 40.

Note that, in the specification, an expression "first through-holes are connected to outer opening portions" also means that the first through-holes and the outer opening portions at least partially overlap with each other in the radial direction and at least a portion of air passing through the first through-holes passes through the outer opening portions. In Figs. 1 and 6, the first through-holes 26 and the outer opening portions 90 are adjacent to each other. Note that, the first through-holes 26 and the outer opening portions 90 may be disposed to be separated from each other in the radial direction. In this case, for example, the upper outer circumferential wall portions 43a are disposed to be separated from an inner surface of the circumferential wall 21 being disposed radially inward of the inner surface and the gaps CL are disposed to be separated from the first through-holes 26 being disposed radially inward of the first through-holes 26.

As illustrated in Fig. 6, each upper outer circumferential wall portion 43a includes a first side end surface 43b and a second side end surface 43c which face the gaps CL and are inclined with respect to the radial direction. That is, at least one of wall portions that are adjacent to each other in the circumferential direction includes a side end surface that faces the gap CL and is inclined with respect to the radial direction. Here, the side end surface is a concept that includes the first side end surfaces 43b and the second side end surfaces 43c. According to the above-described configuration, air flowing into the gaps CL via the first through-holes 26 can be smoothly guided along the first side end surfaces 43b and the second side end surfaces 43c. Accordingly, it is possible to suppress loss of air. In addition, it is easy to guide air flowing into the housing 20 to a predetermined position in the stator 40 by using the gaps CL. Accordingly, it is easy to send air discharged via the inner opening portions 91 of the gaps CL to, for example, the coils 42 that generate heat most in the stator 40. Therefore, it is easy to cool the stator 40. As a result, according to the embodiment, it is possible to obtain the blower 1 that has a structure with which it is possible to effectively cool the stator 40 while suppressing a decrease in air blowing efficiency.

In the embodiment, since each inner opening portion 91 is positioned between the coils 42 that are adjacent to each other in the circumferential direction, it is easy to guide air discharged via the inner opening portions 91 toward the coils 42 as illustrated in Fig. 6. Accordingly, it is possible to further improve the cooling efficiency of the stator 40.

In addition, since the upper insulators 43 are provided with the upper outer circumferential wall portions 43a, it is not necessary to separately provide a member including the first side end surface 43b and the second side end surface 43c. Accordingly, it is possible to reduce the number of components in the blower 1.

The first side end surface 43b is a surface of the upper outer circumferential wall portion 43a that is on the front side (the +θz side) in the rotation direction. The first side end surface 43b faces the outer side in the radial direction. The second side end surface 43c is a surface of the upper outer circumferential wall portion 43a that is on the rear side (the -θz side) in the rotation direction. The second side end surface 43c faces the inner side in the radial direction.

The first side end surface 43b of one upper outer circumferential wall portion 43a of the adjacent upper outer circumferential wall portions 43a and the second side end surface 43c of the other upper outer circumferential wall portion 43a are disposed to face each other in the circumferential direction with the gap CL interposed therebetween. In other words, the side end surfaces include the first side end surface 43b of one upper outer circumferential wall portion 43a of the upper outer circumferential wall portions 43a that are adjacent to each other in the circumferential direction and the second side end surface 43c of the other upper outer circumferential wall portion 43a, the second side end surface 43c facing the first side end surface 43b in the circumferential direction with the gap CL interposed therebetween.

In plan view, each of the first side end surfaces 43b and the second side end surfaces 43c is positioned to become closer to the front side in the rotation direction (the +θz side) of the impeller 70 as it goes toward the inner side in the radial direction from the outer side in the radial direction. Here, air discharged from the impeller 70 is discharged in a direction that is inclined with respect to the radial direction and is inclined toward the front side in the rotation direction when the impeller 70 rotates. Therefore, air that is discharged from the blower 1 and passes through an area between the casing of the device, in which the blower 1 is installed, and the housing 20 swirls around the outer circumferential portion of the housing 20 in a direction toward the front side in the rotation direction. Accordingly, since each of the first side end surfaces 43b and the second side end surfaces 43c is inclined toward the front side in the rotation direction of the impeller 70 in a direction toward the inner side in the radial direction, it is possible to guide air along a direction in which air swirls in the gaps CL. Therefore, it is possible to further reduce the amount of air that is lost when flowing into the housing 20.

Since the first side end surfaces 43b and the second side end surfaces 43c are inclined as described above, an inclination direction (a direction from the outer side in the radial direction to the inner side in the radial direction) of each gap CL with respect to the radial direction as seen from above coincides with a flow direction of air discharged from the stationary blade member 60 in the circumferential direction. That is, the inclination direction coincides with the rotation direction of the impeller 70. The gaps CL extend from an inner circumferential surface of the circumferential wall 21 to the coils 42. Therefore, it is further easy to guide air passing through the gaps CL to the coils 42. Accordingly, it is possible to further improve the cooling efficiency of the stator 40.

In plan view, inclination of each first side end surface 43b with respect to the radial direction and inclination of each second side end surface 43c with respect to the radial direction are different from each other. Therefore, it is possible to change the width of the gaps CL in the circumferential direction. Accordingly, it is possible to form the gap CL such that the gap CL has a shape with which air is more easily guided to the coils 42.

More specifically, inclination of each first side end surface 43b with respect to the radial direction is greater than inclination of each second side end surface 43c with respect to the radial direction. Accordingly, the width of the outer opening portions 90 in the circumferential direction is larger than the width of the inner opening portions 91 in the circumferential direction. Since the outer opening portions 90 that are positioned close to the inlets of the gaps CL are relatively large, a larger amount of air can be sucked into the gaps CL through the first through-holes 26 and since the width of the inner opening portions 91 that are positioned close to the outlets is relatively small, air discharged through the gaps CL can be caused to flow toward a target position (the coils 42) more accurately. Accordingly, it is possible to more effectively cool the stator core 41 and the coils 42 by using air flowing from the first through-holes 26. Note that, inclination of each first side end surface 43b with respect to the radial direction and inclination of each second side end surface 43c with respect to the radial direction may be the same as each other.

In plan view, each of the first side end surfaces 43b and the second side end surfaces 43c is a curved surface. Therefore, in the gaps CL, it is possible to further smoothly guide air along the first side end surfaces 43b and the second side end surfaces 43c. Note that, each of the first side end surfaces 43b and the second side end surfaces 43c may be a flat surface.

As illustrated in Fig. 1, the inclined members 46 disposed on the core back portion 41a are positioned below the gaps CL. The inclined members 46 are interposed between the first side end surfaces 43b and the second side end surfaces 43c. As described above, the position of the upper surface of each inclined member 46 that face the gap CL becomes lower toward the inner side in the radial direction from the outer side in the radial direction. Therefore, it is possible to guide air that flows into the gap CL via the first through-holes 26 to the lower side while sending the air radially inwards. Accordingly, it is possible to suppress loss of air in comparison with a case where the inclined members 46 are not provided and air flowing into the gaps CL collides with the upper surfaces of the arc portions 41d. In addition, as described above, the upper surface of each inclined member 46 is a curved surface of which the inclination with respect to the axial direction becomes small toward the inner side in the radial direction from the outer side in the radial direction. Therefore, it is possible to smoothly guide air along the upper surfaces of the inclined members 46. Accordingly, it is possible to further reduce the amount of air lost.

The three lower outer circumferential wall portions 44a positioned below the core back portion 41a in Fig. 5 surround the coils 42 at a position below the stator core 41. Although a gap is provided between the lower outer circumferential wall portions 44a that are adjacent to each other in the circumferential direction, the lower outer circumferential wall portions 44a may be in contact with each other in the circumferential direction. A portion of an outer circumferential surface of each lower outer circumferential wall portion 44a that is positioned below the linear portion 41c of the core back portion 41a is a lower flat surface 44d that is aligned with the outer circumferential surface of the linear portion 41c and extends in the axial direction. An arc-shaped surface that is disposed along the inner circumferential surface of the housing 20 is provided on each of the opposite sides of each lower flat surface 44d in the circumferential direction.

As illustrated in Fig. 4, the upper flat surface 43f, the outer circumferential surface of the linear portion 41c, and the lower flat surface 44d are continuously disposed to constitute a flat surface extending in the axial direction. The flat surface that the upper flat surface 43f, the outer circumferential surface of the linear portion 41c, and the lower flat surface 44d constitute is disposed to substantially coincide with the cut-out portion 22b as seen in the axial direction.

As illustrated in Fig. 1, flow paths FP extending in the axial direction are provided between the stator 40 and the housing 20 in the radial direction. Each flow path FP includes an exhaust port on the lower side. The exhaust port of each flow path FP is the lower opening portion 24. The housing 20 includes the second through-holes 25 that open into the flow paths FP. Therefore, a portion of air discharged from the exhaust port 95 flows into the flow paths FP via the second through-holes 25. Air flowing into the flow paths FP flows downwards in the flow paths FP. Accordingly, it is possible to cool the stator 40 by using air passing through the flow paths FP. Air that flows into the flow paths FP via the second through-holes 25 is discharged downwards via the lower opening portions 24.

The flow paths FP include spaces between the inner surface of the circumferential wall 21 and the upper flat surfaces 43f of the upper insulators 43, spaces between the inner surface of the circumferential wall 21 and the linear portions 41c of the core back portion 41a, and spaces between the inner surface of the circumferential wall 21 and the lower flat surfaces 44d of the lower insulators 44. That is, at least a portion of a radially outer surface of the core back portion 41a is exposed in the flow paths FP. Therefore, air that flows into the flow paths FP via the second through-holes 25 comes into direct contact with the core back portion 41a. Accordingly, it is possible to further improve the cooling efficiency of the stator core 41.

As illustrated in Figs. 1 and 4, the blower 1 further includes a plurality of plate-shaped portions 45 that extend in the axial direction. In the embodiment, three plate-shaped portions 45 are provided. In Fig. 4, the plate-shaped portions 45 are provided on the lower insulators 44. As illustrated in Figs. 4 and 6, the plate-shaped portions 45 are erected to be substantially perpendicular to the lower flat surfaces 44d. As illustrated in Figs. 1 and 6, the plate-shaped portions 45 are positioned in the flow paths FP. Tip ends of the plurality of plate-shaped portions 45 that are on the outer side in the radial direction reach the inner circumferential surface of the housing 20. That is, the plurality of plate-shaped portions 45 extend from the stator 40 to reach the housing 20. The plurality of plate-shaped portions 45 are disposed along the circumferential direction. Accordingly, the plate-shaped portions 45 partition a region between the lower outer circumferential wall portions 44a and the housing 20 in the flow paths FP into a plurality of regions in the circumferential direction. Therefore, it is possible to rectify air passing through the flow paths FP and to suppress loss of air passing through the flow paths FP. As a result, it is possible to improve the air blowing efficiency of the blower 1.

As illustrated in Figs. 1 and 6, the circuit board 50 is disposed between the stator 40 and the lower cover 22. As illustrated in Fig. 5, the circuit board 50 includes the annular main body portion 50a and three protruding portions 50b that protrude outwards in a direction oblique to the radial direction from an outer circumferential edge of the main body portion 50a. The main body portion 50a includes a hole through which the shaft 31 passes. The circuit board 50 is fixed to the lower insulators 44.

As illustrated in Fig. 6, at least three rotation sensors 51 are mounted on the circuit board 50. Each rotation sensor 51 is, for example, a hall element. The circuit board 50 may be electrically connected with the coils 42. In this case, a drive circuit that outputs a drive signal with respect to the coils 42 may be mounted on the circuit board 50.

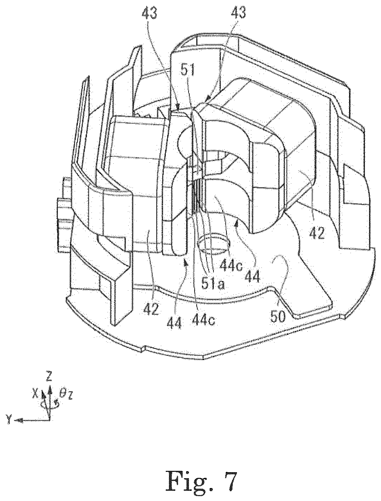

As illustrated in Figs. 6 and 7, each rotation sensor 51 is disposed being interposed between tip end portions of the lower inner circumferential wall portions 44c that are adjacent to each other in the circumferential direction. The three rotation sensors 51 are disposed at regular intervals of 120° in the circumferential direction. Radially inner surfaces of the rotation sensors 51 face the rotor magnet 33.

As illustrated in Fig. 1, in the case of the embodiment, the rotor magnet 33 is disposed at a central position in the rotor 30 in the axial direction. Therefore, the rotation sensors 51 are connected to the circuit board 50 via leads 51a of which the length corresponds to an axial length from the circuit board 50 to the rotor magnet 33.

Since the three rotation sensors 51 are disposed being interposed between the tip end portions of the lower inner circumferential wall portions 44c that are adjacent to each other in the circumferential direction, it is possible to reduce the axial length of the motor 10 in comparison with, for example, a configuration in which a sensor magnet is disposed below the lower magnet fixing member 32 and the rotation sensors 51 are disposed below the sensor magnet.

A mechanism that supports the rotation sensor 51 may be provided on the tip end portion of each lower inner circumferential wall portion 44c. For example, it is possible to suppress the movement of the rotation sensors 51 in the radial direction by providing recess portions into which the rotation sensors 51 are inserted. Alternatively, the rotation sensors 51 may be fixed to the lower inner circumferential wall portions 44c in a snap-fitting manner or the like.

As illustrated in Figs. 1 and 2, the stationary blade member 60 includes the first stationary blade member 61a and the second stationary blade member 61b. The first stationary blade member 61a and the second stationary blade member 61b are attached to an upper surface of the motor 10 while being stacked in the axial direction. The first stationary blade member 61a includes a lower stationary blade supporting ring 62, an attachment ring 63, three connection portions 64, and a plurality of lower stationary blades 67b. The lower stationary blade supporting ring 62 and the attachment ring 63 are coaxially disposed and are connected to each other via the three connection portions 64 that extend in the radial direction. The three connection portions 64 are disposed at regular intervals of 120° in the circumferential direction. Each connection portion 64 includes a connection portion through-hole 64a that penetrates each connection portion 64 in the axial direction. The three connection portion through-holes 64a are disposed at regular intervals of 120° in the circumferential direction. An upper surface of the attachment ring 63 is provided with a recess groove 63a that is concentric with the attachment ring 63.

The plurality of lower stationary blades 67b protrude radially outwards from an outer circumferential surface of the lower stationary blade supporting ring 62. The plurality of lower stationary blades 67b are disposed at regular intervals in the circumferential direction. The outer circumferential surface of the lower stationary blade supporting ring 62 has a tapered shape that becomes narrower toward the upper side. Each lower stationary blade 67b has a shape of which the width in the radial direction increases toward the upper side.

The second stationary blade member 61b includes an annular plate-shaped supporting body 66a, a cylindrical upper stationary blade supporting ring 66b that extends downwards from an outer circumferential edge of the supporting body 66a, a plurality of upper stationary blades 67a, an outer circumferential ring 65 that is connected to a radially outer side of the upper stationary blades 67a, and an annular protruding portion 66c that protrudes upwards from the outer circumferential edge of the supporting body 66a. The plurality of upper stationary blades 67a connect an outer circumferential surface of the upper stationary blade supporting ring 66b and an inner circumferential surface of the outer circumferential ring 65 to each other in the radial direction. The upper stationary blade supporting ring 66b includes a stepped portion 66d that extends around an outer circumferential portion of a lower end portion thereof.

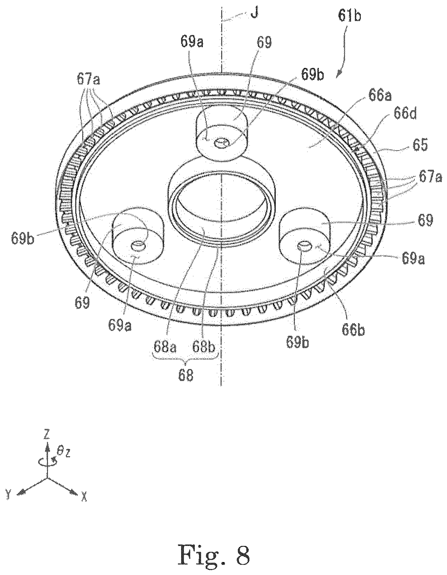

As illustrated in Fig. 8, the supporting body 66a includes an attachment ring 68 that extends downwards from a lower surface of a central portion thereof and three columnar projecting portions 69 that protrude downwards from a lower surface of the supporting body 66a. The attachment ring 68 includes a cylindrical tube portion 68a and an annular protruding portion 68b that protrudes downwards from a radially outer circumferential portion of a lower end surface of the tube portion 68a. The three columnar projecting portions 69 have the same outer diameter and height and are disposed at regular intervals of 120° in the circumferential direction. In the embodiment, the columnar projecting portions 69 are hollow and each columnar projecting portion 69 includes a projecting portion through-hole 69b that penetrates the center of a lower end surface 69a in the axial direction.

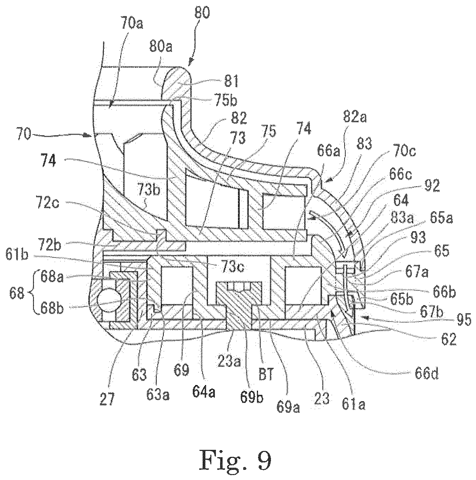

As illustrated in Figs. 1 and 9, the upper bearing holding portion 27 of the motor 10 is inserted into the attachment ring 63 of the first stationary blade member 61a. As illustrated in Fig. 1, a lower end surface of the lower stationary blade supporting ring 62 of the first stationary blade member 61a comes into contact with a stepped surface 28a of the stepped portion 28 of the motor 10, the stepped surface 28a facing the upper side.

The second stationary blade member 61b is attached to the first stationary blade member 61a. As illustrated in Fig. 9, the upper bearing holding portion 27 is inserted into the attachment ring 68 of the second stationary blade member 61b. The protruding portion 68b, which is a lower tip end of the attachment ring 68, is fitted into the recess groove 63a of the first stationary blade member 61a. The stepped portion 66d of the upper stationary blade supporting ring 66b of the second stationary blade member 61b are fitted into an upper opening end of the lower stationary blade supporting ring 62. The outer circumferential surface of the upper stationary blade supporting ring 66b and the outer circumferential surface of the lower stationary blade supporting ring 62 are smoothly connected to each other in the axial direction.

The columnar projecting portions 69 of the second stationary blade member 61b are inserted into the connection portion through-holes 64a of the first stationary blade member 61a. The end surface 69a of each columnar projecting portion 69 comes into contact with an upper surface of the upper cover portion 23 of the motor 10. The second stationary blade member 61b and the motor 10 are fixed to each other by bolts BT that pass through the projecting portion through-holes 69b of the columnar projecting portions 69 and screw holes 23a of the upper cover portion 23. The first stationary blade member 61a is positioned in the circumferential direction by the columnar projecting portions 69 of the second stationary blade member 61b and is fixed to the motor 10 by being pressed by the attachment ring 68 and the upper stationary blade supporting ring 66b of the second stationary blade member 61b.

In the embodiment, two members (the first stationary blade member 61a and the second stationary blade member 61b) constitute a stationary blade member 60 and the metal housing 20 of the motor 10 is fixed only to the second stationary blade member 61b. Since such a fixing method is used, it is possible to suppress a fixing failure between the motor 10 and the stationary blade member 60 which occurs when there is a change in temperature of the blower 1.

Specifically, if the first stationary blade member 61a and the second stationary blade member 61b are fixed to the motor 10 with the same bolts BT passing through both of the first stationary blade member 61a and the second stationary blade member 61b, the amount of change in volume of a resin member due to a temperature change becomes great since the bolts BT fasten two resin members. In this case, the stationary blade member 60 may contract and vibrate in a low-temperature environment. However, in the embodiment, since the end surfaces 69a of the columnar projecting portions 69 of the second stationary blade member 61b are fixed to the housing 20 with the bolts BT in a state of being in contact with the housing 20, it is possible to reduce the thickness of the resin member fixed by the bolts BT. Accordingly, the amount of change in volume of the resin member at the time of the temperature change becomes small and thus it is possible to suppress the fixing being loosened.

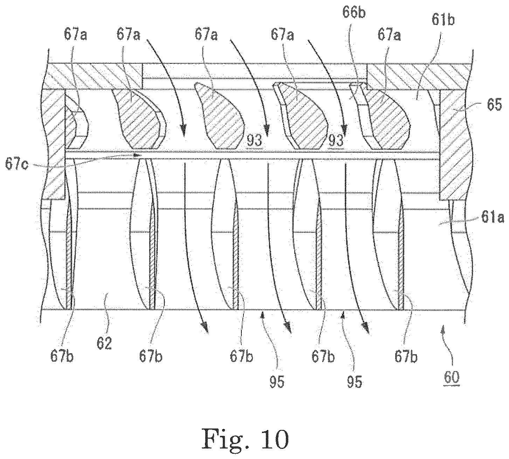

As illustrated in Fig. 10, the number of upper stationary blades 67a disposed in the circumferential direction is the same as the number of lower stationary blades 67b disposed in the circumferential direction. The upper stationary blades 67a and the lower stationary blades 67b respectively correspond to each other and are disposed being arranged in the axial direction. In the case of the embodiment, an inclination angle of each upper stationary blade 67a with respect to the axial direction is larger than an inclination angle of each lower stationary blade 67b with respect to the axial direction. The upper stationary blades 67a are disposed being inclined at a relatively large angle such that air flowing in a direction inclined with respect to the rotation direction of the impeller 70 is effectively caused to flow into an area between the upper stationary blades 67a. The lower stationary blade 67b guides the air downwards such that the air discharged via the exhaust port 95 does not flow to the outer side in the radial direction.

In the embodiment, a gap 67c is a gap extending in a horizontal direction. However, the gap 67c may be a gap that extends in a direction oblique with respect to the horizontal direction. In a case where the gap 67c is a gap extending in an oblique direction, the same direction as an inclination direction of the upper stationary blades 67a is preferable. When such a gap extending in an oblique direction is provided, air passes through the gap and thus it is possible to effectively use the entire portion of an exhaust gas flow path 93.

In the embodiment, as illustrated in Fig. 9, the exhaust gas flow path 93 moves radially outwards in the vicinity of the exhaust port 95. That is, the outer circumferential surface of the lower stationary blade supporting ring 62 of the first stationary blade member 61a has a tapered shape of which the outer diameter increases toward the lower side. In addition, a lower ring 65b, which is a portion of the outer circumferential ring 65 of the second stationary blade member 61b and faces the lower stationary blade supporting ring 62 in the radial direction, has a skirt-like shape of which the inner circumference increases toward the lower side. According to this configuration, the exhaust gas flow path 93 expands radially outwards toward the lower side with the width thereof in the radial direction being maintained. Accordingly, the sectional area of the exhaust gas flow path 93 in the horizontal direction gradually increases toward the exhaust port 95. Therefore, it is possible to reduce an exhaust sound that is generated when air is discharged from the exhaust port 95.

As illustrated in Fig. 1, the impeller 70 discharges fluid that is sucked via an intake port 70a, which opens upwards, radially outwards via an internal flow path. The impeller 70 includes an impeller main body 71 and an impeller hub 72.

The impeller main body 71 includes a base portion 73, a plurality of moving blades 74, and a shroud 75. The base portion 73 has a disc-like shape and includes a base portion through-hole 73a that penetrates a central portion thereof in the axial direction. The vicinity of the base portion through-hole 73a is a conical surface-shaped inclined surface portion 73b that protrudes upwards. Each of the moving blades 74 is a plate-shaped member that extends from the inner side to the outer side in the radial direction on an upper surface of the base portion 73 and is curved in the circumferential direction. The moving blades 74 are disposed being erected along the axial direction. The shroud 75 has a cylindrical shape that becomes narrower toward the upper side in the axial direction. A central opening portion of the shroud 75 is the intake port 70a of the impeller 70. The base portion 73 and the shroud 75 are connected to each other via the moving blades 74.

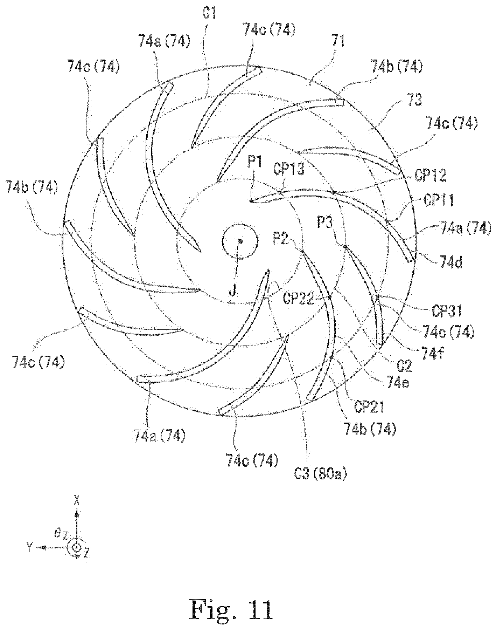

As illustrated in Fig. 11, the plurality of moving blades 74 are disposed along the circumferential direction (the θz direction) on the upper surface of the base portion 73. As illustrated in Fig. 1, the moving blades 74 are erected vertically along the axial direction from the upper surface of the base portion 73.

As illustrated in Fig. 11, in the embodiment, three types of moving blades 74 are disposed such that the same types of moving blades are disposed at regular intervals in the circumferential direction. In the embodiment, the plurality of moving blades 74 include a plurality of (three) first moving blades 74a, a plurality of (three) second moving blades 74b, and a plurality of (six) third moving blades 74c. The three first moving blades 74a are disposed at regular intervals of 120° in the circumferential direction. Each second moving blade 74b is disposed between the first moving blades 74a that are adjacent to each other in the circumferential direction. The three second moving blade 74b are also disposed at regular intervals of 120° in the circumferential direction. Each third moving blade 74c is disposed between the first moving blade 74a and the second moving blade 74b that are adjacent to each other in the circumferential direction. The six third moving blade 74c are disposed at regular intervals of 60° in the circumferential direction.

Each moving blade 74 extends on the upper surface of the base portion 73 and has a curvature in a plane view (a XY plane view). One end of each moving blade 74 is positioned on an outer circumferential edge of the base portion 73. The other end of each moving blade 74 is positioned radially inward of the outer circumferential edge of the base portion 73.

That is, a radially outer end portion of any of the first moving blades 74a, the second moving blades 74b, and the third moving blades 74c is positioned on the outer circumferential edge of the base portion 73. Meanwhile, an end portion P1 of each first moving blade 74a that is on an inner circumferential side is positioned closest to the center of the base portion 73. An end portion P2 of each second moving blade 74b that is on the inner circumferential side is positioned radially outward of the end portion P1 of each first moving blade 74a. An end portion P3 of each third moving blade 74c that is on the inner circumferential side is positioned radially outward of the end portion P2 of each second moving blade 74b. According to this configuration, it is possible to reduce turbulent flow in the impeller 70 and thus an air blowing efficiency of the impeller 70 is improved.

Any of the first moving blades 74a, the second moving blades 74b, and the third moving blades 74c has a shape that is curved like a bow in a counter-clockwise direction. Each first moving blade 74a is formed of four arcs that are different in radius of curvature. A projecting blade surface 74d of each first moving blade 74a has three inflection points CP11, CP12, and CP13 in a longitudinal direction thereof. Each second moving blade 74b is formed of three arcs that are different in radius of curvature. A projecting blade surface 74e of each second moving blade 74b has two inflection points CP21 and CP22 in a longitudinal direction thereof. Each third moving blade 74c is formed of two arcs that are different in radius of curvature. A projecting blade surface 74f of each third moving blade 74c has one inflection point CP31 in a longitudinal direction thereof.

In the embodiment, the inflection point CP11 of each first moving blade 74a, the inflection point CP21 of each second moving blade 74b, and the inflection point CP31 of each third moving blade 74c are disposed on the same radial position C1 in the base portion 73. In addition, the radius of curvature of a portion of each first moving blade 74a that is disposed outward of the radial position C1, the radius of curvature of a portion of each second moving blade 74b that is disposed outward of the radial position C1, and the radius of curvature of a portion of each third moving blade 74c that is disposed outward of the radial position C1, are equal to each other.

Next, the inflection point CP12 of each first moving blade 74a, the inflection point CP22 of each second moving blade 74b, and the end portion P3 of each third moving blade 74c are disposed on the same radial position C2 in the base portion 73. In addition, the radius of curvature of a portion of each first moving blade 74a that is disposed between the radial position C1 and the radial position C2, the radius of curvature of a portion of each second moving blade 74b disposed between the radial position C1 and the radial position C2, and the radius of curvature of a portion of each third moving blade 74c that is disposed between the radial position C1 and the radial position C2, are equal to each other.

Next, the inflection point CP13 of each first moving blade 74a and the end portion P2 of each second moving blade 74b are disposed on the same radial position C3 in the base portion 73. In addition, the radius of curvature of a portion of each first moving blade 74a that is disposed between the radial position C2 and the radial position C3 and the radius of curvature of a portion of each second moving blade 74b disposed between the radial position C2 and the radial position C3 are equal to each other.

The radii of curvature of the blade surfaces 74d to 74f of the moving blades 74 (74a to 74c) in the embodiment are different for each radial region in the impeller 70. Meanwhile, portions of different types of moving blades 74 (the first moving blades 74a to third moving blades 74c) that belong to the same radial region are set to have the same radius of curvature.

In the embodiment, the radial position C3 coincides with the intake port 80a of the impeller housing 80 as seen in the axial direction. Accordingly, only a portion of each first moving blade 74a that is disposed closer to the inner circumferential side than the inflection point CP13 is disposed inward of the intake port 80a.

As illustrated in Fig. 1, the impeller hub 72 includes a tube portion 72a that extends in the axial direction, a disc-shaped flange portion 72b that expands radially outwards from a lower portion of an outer circumferential surface of the tube portion 72a, and a plurality of projecting portions 72c that protrude upwards from an upper surface of the flange portion 72b. The tube portion 72a includes a tapered inclined surface portion 72d that becomes narrower toward an upper tip end portion.

The impeller hub 72 is attached to the impeller main body 71 by inserting the tube portion 72a into the base portion through-hole 73a from the lower side. The tube portion 72a may be press-fitted into the base portion through-hole 73a and may be fixed using a bonding agent or the like. The flange portion 72b of the impeller hub 72 supports the impeller main body 71 from the lower side. As illustrated in Fig. 9, the projecting portions 72c on the flange portion 72b are fitted into recess portions 73c on the lower surface of the base portion 73. Since the projecting portions 72c are fitted into the recess portions 73c, a relative movement of the impeller main body 71 and the impeller hub 72 in the circumferential direction is suppressed.

Since the impeller hub 72 includes the flange portion 72b, it is possible to support the impeller main body 71 with the flange portion 72b over a wide area in the radial direction from below. Accordingly, it is possible to stably hold the impeller 70 and the stability at the time of highspeed rotation becomes high. That is, since it is possible to support the impeller main body 71 with the flange portion 72b over a wide area in the radial direction from below, it is possible to reduce vibration of the impeller 70 with respect to the shaft 31.

As illustrated in Fig. 1, in the impeller 70, the inclined surface portion 72d of a tip end of the tube portion 72a of the impeller hub 72 and the inclined surface portion 73b of the base portion 73 are smoothly connected to each other in the axial direction. The inclined surface portion 72d and the inclined surface portion 73b constitute an annular inclined surface 70b that guides fluid sucked via the intake port 70a of the impeller 70 to the outer side in the radial direction.

Since the impeller main body 71 and the impeller hub 72 constitute the annular inclined surface 70b, it is possible to increase the maximum height of the annular inclined surface 70b by increasing the length of the tube portion 72a (the inclined surface portion 72d) without increasing the height of the inclined surface portion 73b of the base portion 73. Accordingly, it is possible to realize the annular inclined surface 70b having a preferable shape while suppressing an increase in thickness of the base portion 73.

The impeller hub 72 is preferably made of metal. In this case, it is possible to firmly connect the shaft 31 and the impeller 70 to each other. Accordingly, it is possible to stably rotate the impeller 70 at a high speed. In addition, since it is possible to use a metal surface as the inclined surface portion 72d, it is possible to smooth a surface of an upper tip end of the annular inclined surface 70b.

The impeller 70 is fixed to the shaft 31 by fitting an upper end portion of the shaft 31 into the tube portion 72a of the impeller hub 72 from the lower side. As illustrated in Figs. 1 and 9, the impeller 70 connected to the shaft 31 is disposed inward of the annular protruding portion 66c of the second stationary blade member 61b. Therefore, the protruding portion 66c is disposed in the vicinity of an exhaust port 70c of the impeller 70.

The protruding portion 66c guides air discharged from the impeller 70 to the lower side together with an exhaust gas guiding portion 83 of the impeller housing 80, which will be described later. In the embodiment, an outer circumferential surface of the protruding portion 66c is an inclined surface that is inclined downwards as it goes radially outwards. The outer circumferential surface of the protruding portion 66c has a curved surface-like shape that is smoothly curved outwards.

A lower end of the outer circumferential surface of the protruding portion 66c is smoothly connected to the outer circumferential surface of the cylindrical upper stationary blade supporting ring 66b. Therefore, the inclination angle of a lower end of the protruding portion 66c with respect to the horizontal direction is substantially 90°. An upper end of the protruding portion 66c is positioned radially outward of an outer circumferential end of the base portion 73 of the impeller 70 while being close to the outer circumferential edge. The upper end of the protruding portion 66c is positioned above the lower surface of the base portion 73 and is positioned below an upper surface of the outer circumferential of the base portion 73.

In the blower 1 in the embodiment, since the protruding portion 66c has the above-described shape and is disposed as described above, air discharged from the impeller 70 can be smoothly guided downwards without turbulent flow. At a lower end of the exhaust port 70c of the impeller 70, air is discharged from the outer circumferential end of the base portion 73 in a substantially horizontal direction. In the embodiment, since the upper end of the protruding portion 66c is positioned below the upper surface of the base portion 73, discharged air does not collide with the protruding portion 66c and is guided along the outer circumferential surface of the protruding portion 66c. Accordingly, it is possible to effectively transport air. In addition, since the protruding portion 66c is provided, air discharged radially outwards from the exhaust port 70c is less likely to flow into an axial gap between the second stationary blade member 61b and the base portion 73.

As illustrated in Fig. 1, the impeller housing 80 is provided with the intake port 80a on an upper side thereof and has a cylindrical shape that becomes narrower toward the upper side in the axial direction. The impeller housing 80 includes an intake gas guiding portion 81 that is positioned at an opening end of the intake port 80a, an impeller housing main body portion 82 that accommodates the impeller 70, and the skirt-shaped exhaust gas guiding portion 83 that extends radially outwards and downwards from an outer circumferential edge of the impeller housing main body portion 82.

The impeller housing main body portion 82 has a sectional shape that conforms to the shroud 75 of the impeller 70. An inner surface (a lower surface) of the impeller housing main body portion 82 and an outer surface (an upper surface) of the shroud 75 face each other with a uniform interval provided therebetween.

The annular intake gas guiding portion 81 that protrudes radially inwards is positioned on an upper end portion of the impeller housing main body portion 82 that is on the inner circumferential side. As illustrated in Fig. 9, the intake gas guiding portion 81 covers an upper end surface 75b of the shroud 75 from above. A small-width gap extending in the radial direction is present between a lower surface of the intake gas guiding portion 81 and the upper end surface 75b of the shroud 75.

An outer circumferential end portion 82a of the impeller housing main body portion 82 is curved downwards around an outer circumferential end of the shroud 75. A small-width gap extending toward the upper side in the axial direction is present between an inner circumferential surface of the outer circumferential end portion 82a and an outer end surface of the shroud 75.

The exhaust gas guiding portion 83 includes a stepped portion 83a that is disposed on a radially inner side on a lower end surface and extends around the exhaust gas guiding portion in the circumferential direction. As illustrated in Fig. 9, the stepped portion 83a is fitted onto a stepped portion 65a of the outer circumferential ring 65 of the second stationary blade member 61b. An inner circumferential surface of the exhaust gas guiding portion 83 and the inner circumferential surface of the outer circumferential ring 65 are smoothly connected to each other in the axial direction and constitute an outer circumferential wall surface of an exhaust gas flow path.

The inner circumferential surface of the exhaust gas guiding portion 83 and the outer circumferential surface of the protruding portion 66c of the second stationary blade member 61b that is positioned below the impeller 70 constitute an exhaust gas flow path 92 that guides air discharged radially outwards from the impeller 70 to the lower side.

As illustrated in Fig. 9, the exhaust gas flow path 92 is connected to the exhaust gas flow path 93 of the stationary blade member 60. As illustrated in Fig. 10, the exhaust gas flow path 93 of the stationary blade member 60 is configured of flow paths between the upper stationary blades 67a and flow paths between the lower stationary blades 67b. A connection portion between the exhaust gas flow path 93 and the outside is the exhaust port 95.

The blower 1 in the embodiment draws air into the impeller 70 via the intake port 80a as illustrated in Fig. 1 by rotating the impeller 70 with the motor 10 and discharges the air radially outwards via the air flow path in the impeller 70. Air discharged from the impeller 70 flows into a region between the upper stationary blades 67a via the exhaust gas flow path 92. The upper stationary blades 67a rectify the air and discharge the air downwards. The lower stationary blades 67b cause the air to flow in a downward direction and guide the air radially outwards. Thereafter, the air is discharged to the outside of the blower 1 from the exhaust port 95.

A portion of the air discharged downwards from the exhaust port 95 flows downwards along an outer circumferential surface of the housing 20 of the motor 10. In addition, the other portion of the air discharged from the exhaust port 95 flows into the motor 10 via the first through-holes 25 and the second through-holes 26 provided in the housing 20.

In the blower 1 of the embodiment, the annular exhaust port 95 that extends around the axis is disposed above the motor 10. Accordingly, it is not necessary to provide an air flow path member for air discharging radially outward of the motor 10. As a result, the motor 10 with a larger diameter can be used and thus it is possible to improve the air blowing efficiency without increasing the diameter of the blower 1. Alternatively, it is possible to reduce the size of the blower 1 while maintaining the air blowing efficiency.

Note that, the exhaust port 95 may be disposed above the stator 40. Since a relationship between the performance and the outer diameter of the motor 10 is determined by the size of the stator 40, if the exhaust port 95 is disposed above at least the stator 40, it is possible to dispose the exhaust port 95 inward of a radially outer end of the motor 10.

In addition, in the embodiment, the blower 1 includes the three gaps CL and the three flow paths FP. According to this configuration, it is possible to effectively cool the stator core 41 or the coils 42 by using air flowing radially inwards from the gaps CL and it is possible to cool the stator core 41 by using air flowing in the axial direction through the flow paths FP.

The present invention is not limited to the above-described embodiment and other configurations may be adopted. In the following description, the same configurations as those in the above description are appropriately given the same reference numerals and description thereof will be omitted in some cases.

Any number of upper outer circumferential wall portions 43a may be provided as long as at least two upper outer circumferential wall portions 43a are provided. That is, the number of the upper outer circumferential wall portions 43a may be two or four or more. In addition, the upper outer circumferential wall portions 43a may be provided in the housing 20 and may be a single separate member. In addition, only a portion of the upper outer circumferential wall portion 43a that includes the first side end surface 43b and the second side end surface 43c may be provided in the housing 20 and may be provided as a separate member. In this case, the portion of the upper outer circumferential wall portion 43a that includes the first side end surface 43b and the second side end surface 43c corresponds to the "wall portion".

That is, at least one of the upper outer circumferential wall portions 43a that are adjacent to each other in the circumferential direction may include a side end surface that faces the gap CL and is inclined with respect to the radial direction. That is, one of the first side end surfaces 43b and the second side end surfaces 43c that face the gaps CL may be a surface extending in a direction parallel to the radial direction.

### <Modification Example 1>

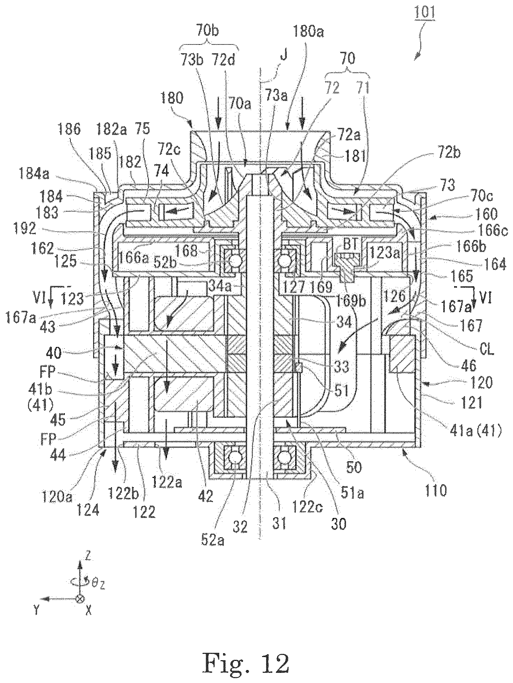

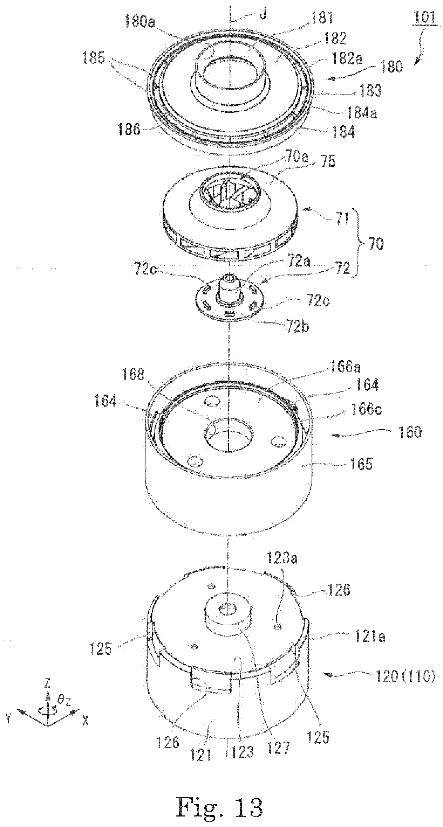

As illustrated in Figs. 12 and 13, a blower 101 includes a motor 110 and the impeller 70. The blower 101 further includes an impeller housing 180 and an exhaust gas guiding member 160. The exhaust gas guiding member 160 is attached to an upper side (the +Z side) of the motor 110. The impeller housing 180 is attached to an upper side of the exhaust gas guiding member 160. The impeller 70 is accommodated between the exhaust gas guiding member 160 and the impeller housing 180. The impeller 70 is attached to the motor 110 such that the impeller 70 can rotate around the central axis J.

As illustrated in Fig. 12, the motor 110 includes a housing 120, a lower cover 122, the rotor 30 that includes the shaft 31, the stator 40, the circuit board 50, the lower bearing 52a, and the upper bearing 52b.

The housing 120 is a covered cylindrical container that accommodates the rotor 30 and the stator 40. The housing 120 surrounds the stator 40 from the outer side in the radial direction. The housing 120 includes a cylindrical circumferential wall 121, an upper cover portion 123 that is positioned on an upper end of the circumferential wall 121, and an upper bearing holding portion 127 that is positioned on the central portion of the upper cover portion 123. The stator 40 is fixed to an inner surface of the housing 120. The upper bearing holding portion 127 has a tubular shape that protrudes upwards from the central portion of the upper cover portion 123. The upper bearing holding portion 127 holds the upper bearing 52b inside thereof.

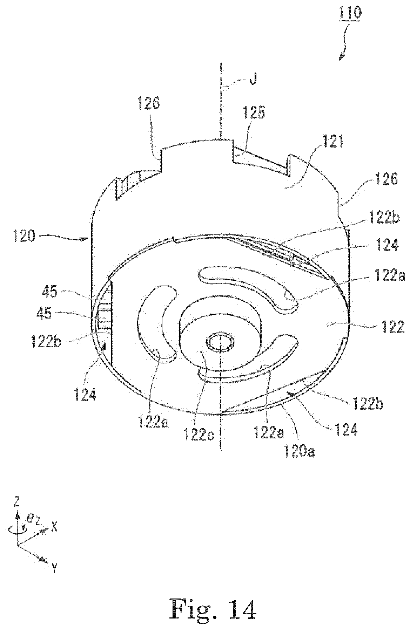

As illustrated in Fig. 13, a plurality of first through-holes 126 and a plurality of second through-holes 125 are provided on an edge portion 121a between the circumferential wall 121 of the housing 120 and the upper cover portion 123. Three first through-holes 126 and three second through-holes 125 are alternately positioned around the axis (refer to Fig. 6). As illustrated in Fig. 13, the first through-holes 126 and the second through-holes 125 extend from an upper portion of the circumferential wall 121 to reach an outer edge portion of the upper cover portion 123. The first through-holes 126 and the second through-holes 125 penetrate the circumferential wall 121 in the radial direction. In addition, as illustrated in Figs. 13 and 14, the first through-holes 126 and the second through-holes 125 penetrate the upper cover portion 123 in the vicinity of a radially outer edge portion of the upper cover portion 123 in the axial direction.

The lower cover 122 is attached to an opening portion of the housing 120 that is on the lower side (the -Z side). A lower bearing holding portion 122c having a tubular shape that protrudes downwards from a lower surface of the lower cover 122 is provided on the central portion of the lower cover 122. The lower bearing holding portion 122c holds the lower bearing 52a.

As illustrated in Fig. 14, on the lower cover 122, three arc-shaped lower cover through-holes 122a, each of which has a width in the radial direction, are provided around the axis. An outer circumferential end of the lower cover 122 is provided with three cut-out portions 122b that are obtained by linearly cutting an outer circumferential portion of the lower cover 122. Gaps between an opening end 120a of the housing 120 that is on the lower side and the cut-out portions 122b are lower opening portions 124 of the motor 110.

As illustrated in Fig. 12, the exhaust gas guiding member 160 is attached to the motor 110. More specifically, the exhaust gas guiding member 160 is attached to the housing 120. The exhaust gas guiding member 160 has a tubular shape that is positioned radially outward of the housing 120. The exhaust gas guiding member 160 is connected to the impeller housing 180 at a position below the impeller housing 180.

The exhaust gas guiding member 160 includes an annular plate-shaped supporting body 166a, a cylindrical partition wall ring 166b that extends downwards from an outer circumferential edge of the supporting body 166a, a plurality of (in the drawing, six) upper guiding portions 164, a tube-shaped outer circumferential tube portion 165 that is connected to the radially outer sides of the upper guiding portions 164, an annular protruding portion 166c that protrudes upwards from the outer circumferential edge of the supporting body 166a, and a plurality of (in the drawing, six) lower guiding portions 167 that are provided on an inner circumferential surface of the outer circumferential tube portion 165 at a position below the upper guiding portions 164.

Note that, in the modification example, the upper guiding portions 164 correspond to "third inclined portions" and the lower guiding portions 167 correspond to "second inclined portions". That is, the exhaust gas guiding member 160 includes the second inclined portions. The exhaust gas guiding member 160 further includes the third inclined portions.

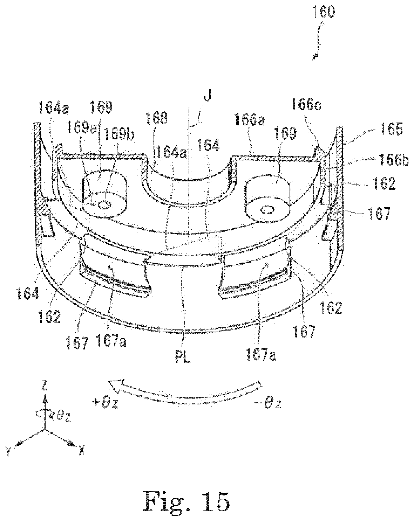

As illustrated in Fig. 15, the supporting body 166a includes a cylindrical attachment ring 168 that extends downwards from a lower surface of a central portion thereof and three columnar projecting portions 169 that protrude downwards from a lower surface of the supporting body 166a. The three columnar projecting portions 169 have the same outer diameter and height and are disposed at regular intervals of 120° in the circumferential direction. In the modification example, the columnar projecting portions 169 are hollow and each columnar projecting portion 169 includes a through-hole 169b that penetrates the center of a lower end surface 169a in the axial direction.

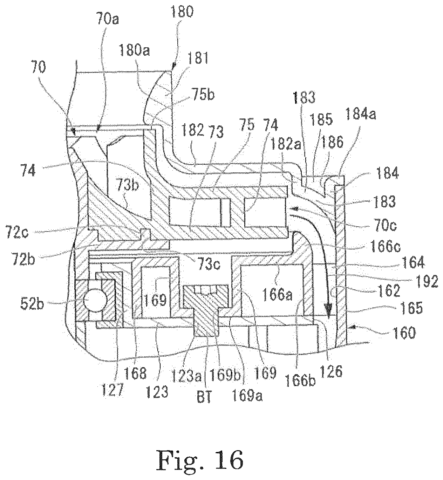

As illustrated in Fig. 16, the upper bearing holding portion 127 of the housing 120 is inserted into the attachment ring 168 of the exhaust gas guiding member 160. A lower surface of the attachment ring 168 of the exhaust gas guiding member 160 and the lower end surfaces 169a of the columnar projecting portions 169 come into contact with an upper surface of the upper cover portion 123 of the housing 120. The exhaust gas guiding member 160 and the motor 110 are fixed to each other by the bolts BT that pass through the through-holes 169b of the columnar projecting portions 169 and screw holes 123a of the upper cover portion 123.

As illustrated in Fig. 15, the outer circumferential tube portion 165 surrounds the supporting body 166a and the partition wall ring 166b from the outer side in the radial direction. The outer circumferential tube portion 165 is connected to the partition wall ring 166b via the upper guiding portions 164. Vertical through-holes 162 that open at the opposite ends in the axial direction are provided between the outer circumferential tube portion 165 and the partition wall ring 166b in the radial direction.

As illustrated in Fig. 16, air discharged radially outwards from the impeller 70 flows into an area between the outer circumferential tube portion 165 and the partition wall ring 166b. In the area between the outer circumferential tube portion 165 and the partition wall ring 166b, the air flowing into the area between the outer circumferential tube portion 165 and the partition wall ring 166b flows downwards while swirling along the circumferential direction toward the front side in the rotation direction (the +θz side). The air flowing into the area between the outer circumferential tube portion 165 and the partition wall ring 166b is discharged downwards via the vertical through-holes 162.

As illustrated in Fig. 15, the plurality of lower guiding portions 167 are respectively positioned below the vertical through-holes 162. The lower guiding portions 167 protrude radially inwards from the inner circumferential surface of the outer circumferential tube portion 165. As illustrated in Fig. 12, the lower guiding portions 167 are fitted into the first through-holes 126 and the second through-holes 125 of the housing 120. At least a portion of each lower guiding portion 167 is positioned radially outward of the first through-hole 126.

The protrusion height of each lower guiding portion 167 in a direction toward the radially inner side becomes great toward the lower side from the upper side. Each lower guiding portion 167 includes an inclined surface 167a that is connected to the upper surface of the inclined member 46. The position of each inclined surface 167a becomes lower toward the inner side in the radial direction from the outer side in the radial direction. Therefore, air discharged downwards via the vertical through-holes 162 can be smoothly guided radially inwards along the inclined surfaces 167a and can flow into the housing 120 through the first through-holes 126 and the second through-holes 125. Accordingly, it is possible to cool the stator 40 by causing air to flow into the housing 120 while suppressing loss of air.

Note that, in the specification, an expression "an inclined surface is connected to an upper surface of an inclined member (the first inclined portion)" also means that air flowing along the inclined surface collides with the upper surface of the inclined member. That is, the inclined surface and the upper surface of the inclined member may be connected to each other and may be disposed with a gap provided therebetween. In Fig. 12, a radially inner end of each inclined surface 167a is connected to a space above the inclined member 46, that is, the gap CL. The radially inner end of each inclined surface 167a and a radially outer end of the upper surface of the inclined member 46 are on the same position in the radial direction. The radially inner end of each inclined surface 167a may be positioned radially outward of the radially outer end of the upper surface of the inclined member 46 and may be positioned radially inward of the radially outer end of the upper surface of the inclined member 46. In a case where the radially inner end of each inclined surface 167a is positioned radially inward of the radially outer end of the upper surface of the inclined member 46, a portion of a radially inner end of each lower guiding portion 167 may overlap with the inclined member 46 in the axial direction.

Each inclined surface 167a is a curved surface of which the inclination with respect to the axial direction becomes great toward lower side from the upper side. Therefore, it is possible to more smoothly guide air flowing into the housing 120 along the inclined surfaces 167a. Accordingly, it is possible to further suppress loss of air flowing into the housing 120. The inclined surfaces 167a face the first through-holes 126 and the second through-holes 125 from the outer side in the radial direction.

As illustrated in Fig. 15, the upper guiding portions 164 are positioned above the lower guiding portions 167 and positioned at different positions from the lower guiding portions 167 in the circumferential direction. More specifically, each upper guiding portion 164 is positioned between the lower guiding portions 167 that are adjacent to each other in the circumferential direction. Each upper guiding portion 164 is positioned between the vertical through-holes 162 that are adjacent to each other in the circumferential direction. The upper guiding portions 164 connect an outer circumferential surface of the partition wall ring 166b and the inner circumferential surface of the outer circumferential tube portion 165 between the outer circumferential tube portion 165 and the partition wall ring 166b in the radial direction. For example, the plurality of upper guiding portions 164 are disposed at regular intervals in the circumferential direction. The number of upper guiding portions 164 and the number of vertical through-holes 162 are the same as each other.

Each upper guiding portion 164 has a triangular shape with an upper surface 164a being inclined as seen in the radial direction. An end portion of the upper surface 164a of each upper guiding portion 164 that is on the front side in the rotation direction of the impeller 70 (the +θz side) is connected to each inclined surface 167a. The position of the upper surface 164a of each upper guiding portion 164 becomes lower toward the front side in the rotation direction. Therefore, air swirling toward the front side in the rotation direction in an area between the outer circumferential tube portion 165 and the partition wall ring 166b in the radial direction can be guided along the upper surfaces 164a and can flow into the vertical through-holes 162. Therefore, it is possible to further suppress loss of air flowing into the housing 120 from the space between the outer circumferential tube portion 165 and the partition wall ring 166b in the radial direction.

Note that, in the specification, an expression "an end portion of an upper guiding portion (the third inclined portion) that is on the front side in the rotation direction (the +θz side) is connected to an inclined surface" also means that the end portion of the upper guiding portion that is on the front side in the rotation direction is connected to a space positioned above the inclined surface. In addition, the expression "an end portion of an upper guiding portion that is on the front side in the rotation direction is connected to an inclined surface" also means that the position of the end portion of the upper guiding portion that is on the front side in the rotation direction is included in the position of the inclined surface in the circumferential direction. In Fig. 15, in the circumferential direction, the end portion of each upper guiding portion 164 that is on the front side in the rotation direction is positioned at the same position as an end portion of each inclined surface 167a that is on the rear side in the rotation direction (the -θz side).

The exhaust gas guiding member 160 can be manufactured through molding using a mold. In a case where the exhaust gas guiding member 160 is formed of resin material, the exhaust gas guiding member 160 is manufactured through, for example, injection molding. The lower guiding portions 167 of the exhaust gas guiding member 160 are positioned immediately below the vertical through-holes 162. The inclined surfaces 167a of the lower guiding portions 167 face the upper side via the vertical through-holes 162. All of surfaces of the exhaust gas guiding member 160 that face the upper side are disposed to be positioned such that surfaces can be seen from the upper side. That is, all of surfaces of the exhaust gas guiding member 160 that face the upper side are provided at different positions from each other as seen from the upper side. Similarly, all of surfaces that face the lower side are provided at different positions from each other as seen from the lower side. Accordingly, it is possible to mold the exhaust gas guiding member 160 by using a pair of upper and lower molds (an upper mold and a lower mold). More specifically, it is possible to mold surfaces of the exhaust gas guiding member 160 that face the upper side by using the upper mold and to mold surfaces that face the lower side by using the lower mold and thus it is possible to manufacture the exhaust gas guiding member 160 at a low cost without using a slide mold that operates in a direction other than the axial direction.

Here, an expression "a surface that faces the upper side" means a surface of which the normal vector includes a vector element in a +Z direction. In addition, an expression "a surface that faces the lower side" means a surface of which the normal vector includes a vector element in a -Z direction. Accordingly, a surface that faces the upper side in an oblique direction is a surface that faces the upper side in the axial direction and a surface that faces the lower side in an oblique direction is a surface that faces the lower side in the axial direction.

Note that, as illustrated in Fig. 15, a parting line PL of the exhaust gas guiding member 160 is provided along lower surfaces of the upper guiding portions 164 from upper ends of the inclined surfaces 167a of the lower guiding portions 167.

The impeller 70 discharges fluid that is sucked via the intake port 70a, which opens upwards, radially outwards via an internal flow path. The impeller 70 includes the impeller main body 71 and the impeller hub 72.

The impeller 70 is fixed to the shaft 31 by fitting an upper end portion of the shaft 31 into the tube portion 72a of the impeller hub 72 from the lower side. As illustrated in Figs. 12 and 16, the impeller 70 connected to the shaft 31 is disposed inward of the annular protruding portion 166c of the exhaust gas guiding member 160. Therefore, the protruding portion 166c is disposed in the vicinity of the exhaust port 70c of the impeller 70.

The protruding portion 166c guides exhaust gas discharged from the impeller 70 to the lower side together with an exhaust gas guiding portion 183 of the impeller housing 180, which will be described later. In the modification example, an outer circumferential surface of the protruding portion 166c is an inclined surface that is inclined downwards as it goes radially outwards. The outer circumferential surface of the protruding portion 166c has a curved surface-like shape that is smoothly curved outwards.

A lower end of the outer circumferential surface of the protruding portion 166c is smoothly connected to the outer circumferential surface of the cylindrical partition wall ring 166b. Therefore, the inclination angle of a lower end of the protruding portion 166c with respect to the horizontal direction is substantially 90°. An upper end of the protruding portion 166c is positioned radially outward of an outer circumferential end of the base portion 73 of the impeller 70 while being close to the outer circumferential edge. The upper end of the protruding portion 166c is positioned above the lower surface of the base portion 73 and is positioned below an upper surface of the outer circumferential end of the base portion 73.

In the blower 101 in the modification example, since the protruding portion 166c has the above-described shape and is disposed as described above, air discharged from the impeller 70 can be smoothly guided downwards without turbulent flow. At a lower end of the exhaust port 70c of the impeller 70, air is discharged from the outer circumferential end of the base portion 73 in the horizontal direction. In the modification example, since the upper end of the protruding portion 166c is positioned below the upper surface of the base portion 73, discharged air does not collide with the protruding portion 166c and is guided along the outer circumferential surface of the protruding portion 166c. Accordingly, it is possible to effectively transport air.

As illustrated in Figs. 12 and 16, the impeller housing 180 is provided with an intake port 180a on an upper side thereof and has a cylindrical shape that becomes narrower toward the upper side in the axial direction. The impeller housing 180 covers the radially outer side of the impeller 70. The impeller housing 180 includes an intake gas guiding portion 181 that is positioned at an opening end of the intake port 180a, an impeller housing main body portion 182 that accommodates the impeller 70, the skirt-shaped exhaust gas guiding portion 183 that extends radially outwards and downwards from an outer circumferential edge of the impeller housing main body portion 182, and an outer circumferential attachment ring 184 that extends upwards from an outer circumferential edge of the exhaust gas guiding portion 183.

The impeller housing main body portion 182 covers an upper side of the impeller 70. The impeller housing main body portion 182 has a sectional shape that conforms to the shroud 75 of the impeller 70. An inner surface (a lower surface) of the impeller housing main body portion 182 and an outer surface (an upper surface) of the shroud 75 face each other with a uniform gap provided therebetween.

The annular intake gas guiding portion 181 that protrudes radially inwards is positioned on an upper end portion of the impeller housing main body portion 182 that is on the inner circumferential side. As illustrated in Fig. 16, the intake gas guiding portion 181 covers an upper end surface 75b of the shroud 75 from above. A small-width gap extending in the radial direction is present between a lower surface of the intake gas guiding portion 181 and the upper end surface 75b of the shroud 75.

An outer circumferential end portion of the impeller housing main body portion 182 is provided with a curved circumferential edge portion 182a that is curved downwards around an outer circumferential end of the shroud 75. The curved circumferential edge portion 182a extends downwards and surrounds an outer end surface of the shroud 75 from the outer side in the radial direction. A small-width gap extending toward the upper side in the axial direction is present between an inner circumferential surface of the curved circumferential edge portion 182a and the outer end surface of the shroud 75.

The exhaust gas guiding portion 183 extends radially outwards and downwards from the outer circumferential edge of the impeller housing main body portion 182. As illustrated in Fig. 12, the exhaust gas guiding portion 183 constitutes an exhaust gas flow path 192 that guides air discharged radially outwards from the impeller 70 to the lower side. An inner circumferential surface of the exhaust gas guiding portion 183 is smoothly inclined from an upper end toward a lower end and from the horizontal direction toward the vertical direction. The lower end of the inner circumferential surface of the exhaust gas guiding portion 183 is smoothly connected to the inner circumferential surface of the outer circumferential tube portion 165 of the exhaust gas guiding member 160 to constitute an outer circumferential wall surface of the exhaust gas flow path 192.

The outer circumferential attachment ring 184 extends upwards from the outer circumferential edge of the exhaust gas guiding portion 183 and the outer circumferential attachment ring 184 fixed to the outer circumferential tube portion 165 has a cylindrical shape. The outer circumferential attachment ring 184 includes a flange portion 184a that extends radially outwards from an upper end. An outer circumferential surface of the outer circumferential attachment ring 184 is fitted onto the inner circumferential surface of the outer circumferential tube portion 165 of the exhaust gas guiding member 160. In addition, the flange portion 184a comes into contact with an upper end of the outer circumferential tube portion 165 to determine the position of the impeller housing 180 relative to the exhaust gas guiding member 160 in the axial direction.

An upper surface of the exhaust gas guiding portion 183 is provided with a recess portion 186 that extends in the circumferential direction. The recess portion 186 is configured by the curved circumferential edge portion 182a, the exhaust gas guiding portion 183, and the outer circumferential attachment ring 184. Since the recess portion 186 is provided, the thickness of the exhaust gas guiding portion 183 of the impeller housing 180 becomes uniform. In addition, as illustrated in Fig. 13, the recess portion 186 is provided with a rib 185 that connects the outer circumferential attachment ring 184 and the curved circumferential edge portion 182a of the impeller housing main body portion 182 in the radial direction.

The impeller housing 180 is manufactured through molding using a mold. That is, the impeller housing 180 is manufactured by injecting fluid material into a gap between two or more molds. The impeller housing 180 in the modification example is formed of resin material and is manufactured through injection molding. In addition, in a case where the impeller housing 180 is formed of aluminum alloy, the impeller housing 180 is manufactured through aluminum die casting. In the case of a molded product manufactured through molding using a mold, a sink mark may be generated on a surface of a thick portion due to contraction which occurs when the material is solidified and thus there may be a decrease in dimensional accuracy. In addition, in a case where aluminum die casting is performed, a pore (mold cavity) may be formed in the thick portion, which results in a decrease in strength.

In the impeller housing 180 of the modification example, the recess portion 186 is provided between the outer circumferential attachment ring 184 and the curved circumferential edge portion 182a of the impeller housing main body portion 182. Therefore, the thickness of the exhaust gas guiding portion 183 in the impeller housing 180 can be made uniform and it is possible to suppress a sink mark being generated in the vicinity of the exhaust gas guiding portion 183. In addition, similarly, it is possible to suppress a pore being formed in the exhaust gas guiding portion 183 in the impeller housing 180. Furthermore, since the recess portion 186 is provided with the rib 185 in the impeller housing 180 in the modification example, the rigidity of the outer circumferential attachment ring 184 can become higher than that of the impeller housing main body portion 182. Accordingly, the outer circumferential attachment ring 184 of the impeller housing 180 can be firmly fixed to the exhaust gas guiding member 160.

The blower 101 in the modification example draws air into the impeller 70 via the intake port 180a as illustrated in Fig. 12 by rotating the impeller 70 with the motor 110 and discharges the air radially outwards via the air flow path in the impeller 70. Air discharged from the impeller 70 flows into the exhaust gas guiding member 160 after passing through the exhaust gas flow path 192. The exhaust gas flow path 192 is positioned between the inner circumferential surface of the exhaust gas guiding portion 183 of the impeller housing 180 and the outer circumferential surface of the protruding portion 166c. The exhaust gas flow path 192 causes air discharged radially outwards from the impeller 70 to flow downwards and causes the air to flow into a region of the upper guiding portions 164. The upper guiding portions 164 smoothly guide air with a flowing component in the circumferential direction that is discharged from the impeller 70 in a downward direction and guide the air to the vertical through-holes 162. Air passing through the vertical through-holes 162 flows downwards along the inner circumferential surface of the outer circumferential tube portion 165, is guided radially inwards by the lower guiding portions 167, and flows into the motor 110 via the first through-holes 126 and the second through-holes 125.

Air flowing into the motor 110 via the second through-holes 125 flows to the flow paths FP between the stator 40 and the housing 120 illustrated in Fig. 6. In the flow paths FP, the air flows downwards. In the flow paths FP, as illustrated in Fig. 4, the outer circumferential surfaces of the linear portions 41c (the stator core 41) are exposed and the stator core 41 is cooled by the air. The plurality of plate-shaped portions 45 are positioned in the flow paths FP and rectify the air flowing in the flow paths FP. The air flowing in the flow paths FP is discharged downwards via the lower opening portions 124 of the motor 110.

The air flowing into the motor 110 via the first through-holes 126 flows into the stator 40 via the gaps CL as illustrated in Fig. 6. The first side end surfaces 43b, the second side end surfaces 43c, and the inclined members 46 constituting the gaps CL guide air passing through the gaps CL toward side surfaces of the coils 42. According to this configuration, it is possible to effectively cool the coils 42 which are heat generating portions of the motor 110. Air flows downwards in the vicinity of the coils 42 and is discharged downwards via lower cover through-holes 122a on the lower surface of the motor 110.

According to the blower 101 in the modification example, air discharged radially outwards from the impeller 70 can be smoothly guided into the motor 110 by using the exhaust gas guiding portion 183, the upper guiding portions 164, and the lower guiding portions 167. Accordingly, the blower 101 can cool the motor 110 while maintaining a high air discharging efficiency.

In the modification example, a case where the exhaust gas guiding member 160 and the housing 120 are separate members that are separated in the vertical direction has been described as an example. However, the exhaust gas guiding member 160 and the housing 120 may be a single member. In this case, it is possible to increase the coaxiality of the exhaust gas guiding member 160 with respect to the motor 110. Therefore, it is possible to increase the symmetry of the motor 110 of the exhaust gas flow path 192 with respect to the central axis J and to increase the pressure stability in the exhaust gas flow path 192.

Note that, the lower guiding portions 167 and the outer circumferential tube portion 165 may be separate members. In this case, the lower guiding portions 167 and the inclined members 46 may be a single member. In addition, the inclined members 46 may be a portion of the exhaust gas guiding member 160. In this case, the inclined members 46 and the lower guiding portions 167 may be connected to each other.

### <Modification Example 2>

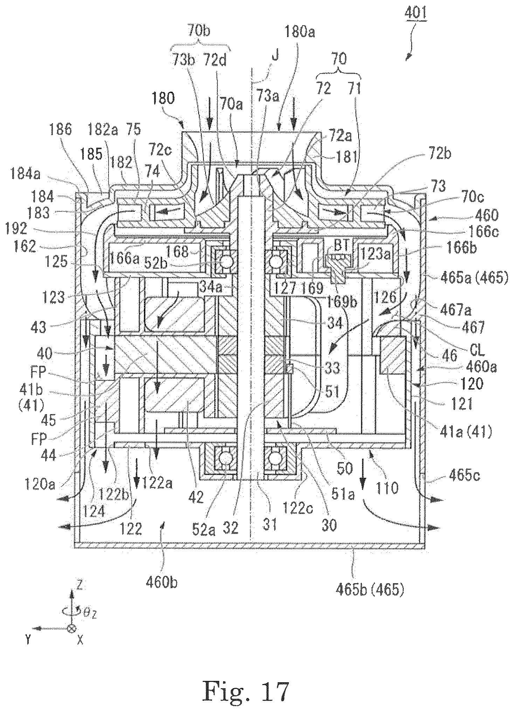

As illustrated in Fig. 17, in an exhaust gas guiding member 460 of a blower 401, an outer circumferential tube portion 465 has a bottomed tubular shape that extends in the axial direction. The outer circumferential tube portion 465 includes a tube portion main body 465a and a bottom portion 465b. The tube portion main body 465a has a cylindrical shape that surrounds the motor 110 from the outer side in the radial direction. The tube portion main body 465a extends from a position above the motor 110 to a position below the motor 110.

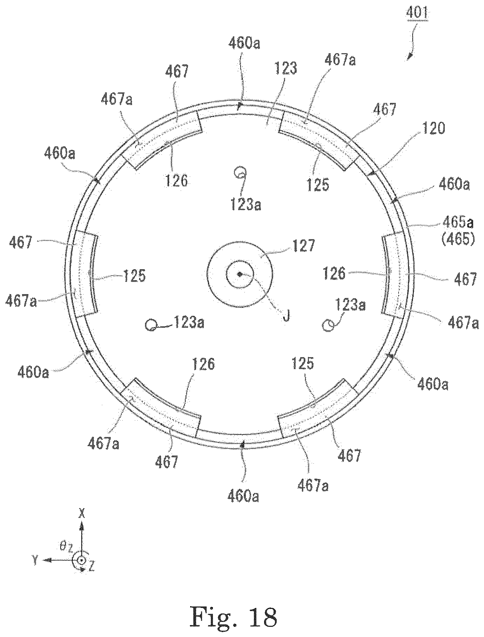

The tube portion main body 465a is disposed to be separated from the housing 120 while being positioned radially outward of the housing 120. Exhaust gas flow paths 460a that extend in the axial direction are provided between the tube portion main body 465a and the housing 120 in the radial direction. As illustrated in Fig. 18, the exhaust gas flow path 460a is disposed in every space between lower guiding portions 467 that are adjacent to each other in the circumferential direction. The number of the exhaust gas flow paths 460a is the same as the number of the lower guiding portions 467 (in Fig. 18, the number of the lower guiding portions 467 is six). Note that, in Fig. 18, the supporting body 166a, the partition wall ring 166b, the protruding portion 166c, the impeller housing 180 and the impeller 70 are not shown.

As illustrated in Fig. 17, upper ends of the exhaust gas flow paths 460a are connected to a space between the tube portion main body 465a and the partition wall ring 166b in the radial direction. Lower ends of the exhaust gas flow paths 460a are connected to a space 460b between the motor 110 and the bottom portion 465b in the axial direction.

The tube portion main body 465a includes exhaust gas through-holes 465c that penetrate the tube portion main body 465a in the radial direction. The exhaust gas through-holes 465c are positioned at a lower end of the tube portion main body 465a. A plurality of (in the drawing, two) exhaust gas through-holes 465c are provided along the circumferential direction.

The bottom portion 465b is connected to the lower end of the tube portion main body 465a. The bottom portion 465b is provided at a position separated from the motor 110 while being positioned below the motor 110. The bottom portion 465b covers a lower side of the motor 110. The exhaust gas guiding member 460 is formed by using a nonflammable member. In the embodiment, the exhaust gas guiding member 460 is formed of material that is obtained by mixing a bromine-based flame retardant with polybutylene terephthalate (PBT). However, the nonflammable member may be other material. For example, the nonflammable member may be material that is obtained by mixing a chlorine-based flame retardant with resin material other than polybutylene terephthalate. Accordingly, it is possible to further improve the fire resistance of the exhaust gas guiding member 460.

In the exhaust gas guiding member 460, the upper guiding portion 164 is not provided and the outer circumferential tube portion 465 and the partition wall ring 166b are not connected to each other. That is, in the exhaust gas guiding member 460, a portion including the outer circumferential tube portion 465 and the lower guiding portions 467 and a portion including the supporting body 166a, the partition wall ring 166b, and the protruding portion 166c are separate members.

As illustrated in Fig. 18, a radially inner end of an inclined surface 467a of each lower guiding portion 467 is connected to the radially outer end of the upper surface of each inclined member 46.

As illustrated in Fig. 17, air discharged radially outwards from the impeller 70 is branched into air flowing into the motor 110 via the first through-holes 126 and the second through-holes 125 and air flowing into the space 460b through the exhaust gas flow paths 460a. That is, in the blower 401, a portion of the air discharged from the impeller 70 is guided into the motor 110. Air that passes through the motor 110 and is discharged via the lower opening portions 124 and the lower cover through-holes 122a flows into the space 460b. The air flowing into the space 460b is discharged to the outside of the blower 401 via the exhaust gas through-holes 465c.

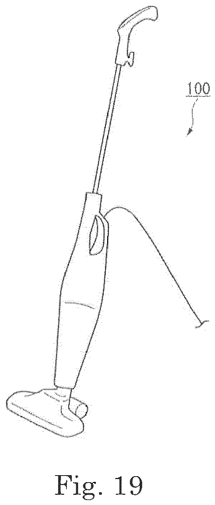

A vacuum cleaner 100 illustrated in Fig. 19 includes the blower according to the invention of the present application. Accordingly, it is possible to effectively cool the stator of the blower installed in the vacuum cleaner 100 while suppressing a decrease in air blowing efficiency of the vacuum cleaner 100.

The above-described configurations can be appropriately combined with each other as long as there is no mutual inconsistency.

### Reference Signs List

1, 101, 401 blower
20, 120 housing
25, 125 second through-hole (through-hole)
26, 126 first through-hole (through-hole)
30 rotor
31 shaft
40 stator
41a core back portion
41b tooth portion
42 coil
43 upper insulator (insulator)
43a upper outer circumferential wall portion (wall portion)
43b first side end surface
43c second side end surface
44 lower insulator (insulator)
45 plate-shaped portion
46 inclined member (first inclined portion)
70 impeller
80, 180 impeller housing
90 outer opening portion
91 inner opening portion
100 vacuum cleaner
160, 460 exhaust gas guiding member
164 upper guiding portion (third inclined portion)
167, 467 lower guiding portion (second inclined portion)
167a, 467a inclined surface
FP flow path
J central axis

## Claims

1. A blower comprising:
a rotor that includes a shaft disposed along a central axis that extends in a vertical direction;
a stator that is positioned radially outward of the rotor;
a tubular housing that accommodates the rotor and the stator; and
an impeller that is attached to the shaft at a position above the stator,
wherein the stator includes
an annular core back portion,
a plurality of tooth portions that extend radially inwards from the core back portion,
a plurality of coils wound around the tooth portions, and
at least two wall portions that are arranged with a gap provided therebetween in a circumferential direction,
wherein radially outer end portions of the two wall portions constitute an outer opening portion of the gap that is on an outer side in a radial direction,
wherein radially inner end portions of the two wall portions constitute an inner opening portion of the gap that is on an inner side in the radial direction,
wherein the housing includes a first through-hole that penetrates the housing in the radial direction,
wherein the first through-hole is connected to the outer opening portion, and
wherein at least one of the wall portions that are adjacent to each other in the circumferential direction includes a side end surface that faces the gap and is inclined with respect to the radial direction.

2. The blower according to Claim 1,
wherein the inner opening portion is positioned between the coils that are adjacent to each other in the circumferential direction.

3. The blower according to Claim 1 or 2,
wherein, in plan view, the side end surface is positioned to become closer to the front side in a rotation direction of the impeller as it goes toward the inner side in the radial direction from the outer side in the radial direction.

4. The blower according to any one of Claims 1 to 3,
wherein the width of the outer opening portion in the circumferential direction is larger than the width of the inner opening portion in the circumferential direction.

5. The blower according to any one of Claims 1 to 4,
wherein, in plan view, the side end surface is a curved surface.

6. The blower according to any one of Claims 1 to 5,
wherein the side end surfaces include
a first side end surface of one of the wall portions that are adjacent to each other in the circumferential direction, and
a second side end surface of the other of the wall portions, the second side end surface facing the first side end surface in the circumferential direction with the gap interposed therebetween, and
wherein, in plan view, inclination of the first side end surface with respect to the radial direction and inclination of the second side end surface with respect to the radial direction are different from each other.

7. The blower according to any one of Claims 1 to 6,
wherein the stator further includes an insulator,
wherein the coils are wound around the tooth portions via the insulator, and
wherein the insulator includes the wall portions.

8. The blower according to any one of Claims 1 to 7,
wherein the stator further includes a first inclined portion of which an upper surface faces the gap, and
wherein the position of the upper surface of the first inclined portion becomes lower toward the inner side in the radial direction from the outer side in the radial direction.

9. The blower according to Claim 8, further comprising:
an impeller housing that covers a radially outer side of the impeller; and
a tubular exhaust gas guiding member that is connected to the impeller housing at a position below the impeller housing and that is positioned radially outward of the housing,
wherein the exhaust gas guiding member includes a second inclined portion of which at least a portion is positioned radially outward of the first through-hole,
wherein the second inclined portion includes an inclined surface that is connected to the upper surface of the first inclined portion, and
wherein the position of the inclined surface becomes lower toward the inner side in the radial direction from the outer side in the radial direction.

10. The blower according to Claim 9,
wherein the exhaust gas guiding member further includes a third inclined portion that is positioned above the second inclined portion and positioned at a different position from the second inclined portion in the circumferential direction,
wherein an end portion of an upper surface of the third inclined portion that is on a front side in the rotation direction of the impeller is connected to the inclined surface, and
wherein the position of the upper surface of the third inclined portion becomes lower toward the front side in the rotation direction.

11. The blower according to any one of Claims 1 to 10,
wherein a flow path extending in an axial direction is provided between the stator and the housing in the radial direction,
wherein the housing includes a second through-hole that opens into the flow path, and
wherein at least a portion of a radially outer surface of the core back portion is exposed in the flow path.

12. The blower according to Claim 11, further comprising:
a plurality of plate-shaped portions that are positioned in the flow path and extend in the axial direction,
wherein the plurality of plate-shaped portions extend from the stator to reach the housing and are disposed along the circumferential direction.

13. The blower according to any one of Claims 1 to 12,
wherein the through-hole is positioned above the core back portion.

14. A vacuum cleaner comprising the blower according to any one of Claims 1 to 13.
